(19) Europäisches Patentamt
European Patent Office
Office européen des brevets

(11) **EP 4 039 219 B1**

(12) **EUROPEAN PATENT SPECIFICATION**

(45) Date of publication and mention
of the grant of the patent:
**06.05.2026 Bulletin 2026/19**

(21) Application number: **20871581.3**

(22) Date of filing: **21.08.2020**

(51) International Patent Classification (IPC):
*A61C 1/06* *(2006.01)*    *A61C 1/12* *(2006.01)*

(52) Cooperative Patent Classification (CPC):
**A61C 1/12; A61C 1/02; A61C 1/185**

(86) International application number:
**PCT/JP2020/031599**

(87) International publication number:
**WO 2021/065242 (08.04.2021 Gazette 2021/14)**

(54) **DENTAL HANDPIECE**

DENTALHANDSTÜCK

PIÈCE À MAIN DENTAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2019 JP 2019181299**

(43) Date of publication of application:
**10.08.2022 Bulletin 2022/32**

(73) Proprietor: **J. Morita MFG. Corp.**
**Kyoto-shi, Kyoto 612-8533 (JP)**

(72) Inventors:
• **TANAKA, Hitoshi**
**Kyoto-shi, Kyoto 612-8533 (JP)**

• **MURATA, Tomoya**
**Kyoto-shi, Kyoto 612-8533 (JP)**
• **NAKAYAMA, Shozo**
**Kyoto-shi, Kyoto 612-8533 (JP)**

(74) Representative: **Müller Hoffmann & Partner Patentanwälte mbB**
**St.-Martin-Straße 58**
**81541 München (DE)**

(56) References cited:
**WO-A1-2018/094302**     **JP-A- 2011 217 954**
**JP-A- 2015 006 488**     **JP-A- H1 024 052**
**US-A1- 2009 004 622**

EP 4 039 219 B1

## Description

Technical Field

The present invention relates to a dental handpiece that holds a cutting tool for cutting caries, which is an affected part, and rotates the cutting tool at a high speed in the field of dental treatment.

Background Art

As a cutting instrument in the field of dental treatment, a motor handpiece that cuts caries which is an affected part of a patient by a drive force of a motor, or an air turbine handpiece that cuts caries by a rotational force of an air turbine is known.

These handpieces can cut a tooth by rotating a cutting tool held by a chuck provided inside a head at a high speed. The faster the revolution speed (rpm) of the cutting tool per minute, that is, the higher the rotation speed, the smoother a tooth can be cut. However, although the rotation of the cutting tool by a typical motor used in the motor handpiece has rotational torque as compared with the rotation of the air turbine handpiece, high-speed rotation as in the air turbine handpiece cannot be obtained.

As such, for example, in the motor handpiece disclosed in Patent Literature 1, two speed-increasing gear mechanisms are provided in a rotation transmission mechanism that transmits the rotation of a motor to a cutting tool, to accelerate the rotation of the motor and rotate the cutting tool at a high speed. This allows a smooth cutting of a tooth.

However, even with the conventional motor handpiece devised to increase the speed as described above, a sufficient rotation speed for efficiently cutting a tooth cannot be obtained, and further increase in the rotation speed is desired.

Citation List

Patent Literature

Patent Literature 1: JP 2009-28512 A
Further technological background can be found in US 2009/004622 A1 and JP 2015 006488 A.

Summary of Invention

Technical Problem

In view of the above problem, an object of the present invention is to provide a dental handpiece capable of rotating a cutting tool at a high speed as compared with the conventional technique.

Solution to Problem

The invention is set out in the appended set of claims. The present invention is a dental handpiece including a main body to be held by a user and a head connected to the main body, wherein the head includes a tool rotating mechanism that holds a cutting tool for operating a region to be operated, rotates based on rotation of a drive unit that is rotationally driven, and rotates the cutting tool, and the tool rotating mechanism has a rotation speed of at least 5.5 times or more a rotation speed of the drive unit. The rotation speed is also referred to as revolution speed per unit time.

As an aspect of the present invention, the main body includes a first rotary shaft to which rotation of the drive unit is transmitted, a second rotary shaft to which rotation of the first rotary shaft is transmitted, and a third rotary shaft to which rotation of the second rotary shaft is transmitted, a first gear mechanism that transmits rotation of the first rotary shaft to the second rotary shaft is provided between the first rotary shaft and the second rotary shaft, a second gear mechanism that transmits rotation of the second rotary shaft to the third rotary shaft is provided between the second rotary shaft and the third rotary shaft, and a third gear mechanism that transmits rotation of the third rotary shaft to the tool rotating mechanism is provided between the third rotary shaft and the tool rotating mechanism.

As an aspect of the present disclosure, the first gear mechanism may transmit rotation of the drive unit to the second rotary shaft such that a rotation speed of the second rotary shaft becomes 1.64 to 4.50 times a rotation speed of the drive unit transmitted to the first rotary shaft, the second gear mechanism may transmit rotation of the drive unit to the third rotary shaft such that a rotation speed of the third rotary shaft becomes 1.00 to 2.43 times the rotation speed of the second rotary shaft, and the third gear mechanism may transmit rotation of the drive unit to the tool rotating mechanism such that a rotation speed of the tool rotating mechanism becomes 0.80 to 2.00 times the rotation speed of the third rotary shaft, to rotate the cutting tool.

The present disclosure may be a dental handpiece including a main body to be held by a user and a head connected to the main body, wherein the main body includes a first rotary shaft to which rotation of a drive unit that is rotationally driven is transmitted, a second rotary shaft to which rotation of the first rotary shaft is transmitted, and a third rotary shaft to which rotation of the second rotary shaft is transmitted, the head includes a tool rotating mechanism that holds a cutting tool for treating a region to be treated, rotates based on rotation of the drive unit, and rotates the cutting tool, the dental handpiece includes: a first gear mechanism that transmits rotation of the first rotary shaft to the second rotary shaft such that a rotation speed of the second rotary shaft becomes 1.64 to 4.50 times a rotation speed of the first rotary shaft; a second gear mechanism that transmits rotation of the second rotary shaft to the third rotary shaft such that a rotation speed of the third rotary shaft becomes 1.00 to 2.43 times a rotation speed of the second rotary shaft; and a third gear mechanism that transmits rotation of the third rotary shaft to the tool rotating mechanism such that a rotation speed of the tool rotating mechanism becomes 0.80 to 2.00 times a rotation speed of the third rotary shaft to rotate the cutting tool, and the first gear mechanism, the second gear mechanism, and the third gear mechanism are combined such that the rotation speed of the tool rotating mechanism is at least 5.5 times or more a rotation speed of the drive unit.

As an aspect of the present disclosure, the third gear mechanism may transmit rotation of the drive unit to the tool rotating mechanism such that the rotation speed of the tool rotating mechanism becomes 1.00 to 2.00 times the rotation speed of the third rotary shaft, and the rotation speed of the tool rotating mechanism may be 6.5 times or more and 7.2 times or less the rotation speed of the drive unit.

As an aspect of the present disclosure, the third gear mechanism may include a third rotary-shaft-side gear that is a bevel gear provided in the third rotary shaft, and a head-side gear that is a bevel gear provided in the tool rotating mechanism and meshes with the third rotary-shaft-side gear, the third rotary-shaft-side gear may have 14 to 20 of teeth, and the head-side gear may have 10 to 14 of teeth.

As an aspect of the present invention, at least one of the first gear mechanism and the second gear mechanism may include an internal gear that transmits rotation and an external gear to which rotation is transmitted, the external gear having a smaller diameter than the internal gear.

As an aspect of the present invention, a tooth of the internal gear may be configured such that a tooth surface has an arc protruding toward a radially outer side of the internal gear.

As an aspect of the present invention, the main body may include a substantially cylindrical first main body provided with the second rotary shaft and a substantially cylindrical second main body provided with a distal end of the third rotary shaft, wherein the second main body has a head side smaller in diameter than the first main body side.

As an aspect of the present invention, the second rotary shaft and the third rotary shaft may form an obtuse angle.

As an aspect of the present invention, the drive unit may have a maximum rotation speed of 40,000 rpm, and the tool rotating mechanism may have a maximum rotation speed of 285,000 rpm.

As an aspect of the present disclosure, each rotation speed change rate of the first gear mechanism, the second gear mechanism, and the third gear mechanism may decrease in this order.

Advantageous Effects of Invention

According to the present invention, it is possible to provide a dental handpiece capable of rotating a cutting tool at a high speed as compared with the conventional technique.

Brief Description of Drawings

FIG 1 is an external perspective view showing an appearance of a dental handpiece.

FIG 2 is an external perspective view of a rotation transmission mechanism provided inside a dental handpiece.

FIG 3 is a cross-sectional view of a dental handpiece.

FIG 4 includes explanatory views of a first rotating body.

FIG 5 is a side view of a second rotating body.

FIG. 6 includes explanatory views of a pinion gear portion.

FIG 7 is a perspective view of a partial cross section of a bevel gear portion.

FIG 8 includes explanatory views of a bevel gear portion.

FIG 9 is a side view of a third rotating body.

FIG 10 is a perspective view of a partial cross section of a middle gear portion.

FIG 11 includes explanatory views of a middle gear portion.

FIG 12 includes explanatory views of a double speed gear portion.

FIG 13 is an exploded perspective view showing an appearance of a head in an exploded state.

FIG 14 is a cross-sectional view of a tool rotating mechanism.

FIG 15 is a side view of a meshed drive gear portion and pinion gear portion.

FIG 16 is a front view of a meshed drive gear portion and pinion gear portion.

FIG 17 is a plan view of a meshed bevel gear portion and middle gear portion.

FIG 18 is a side cross-sectional view of a meshed bevel gear portion and middle gear portion.

FIG 19 is a cross-sectional view of a meshed double speed gear portion and head-side gear portion.

FIG 20 includes tables of gear ratios in a gear mechanism.

Description of Embodiment

An embodiment of the present invention will be described below with reference to the drawings.
A motor handpiece 1 is a dental handpiece that holds a cutting tool 3 for cutting a tooth and rotates the cutting tool 3 at a high speed, which transmits driving of a motor to the cutting tool 3 to rotate the cutting tool 3 at a high speed.

<Overall Configuration>

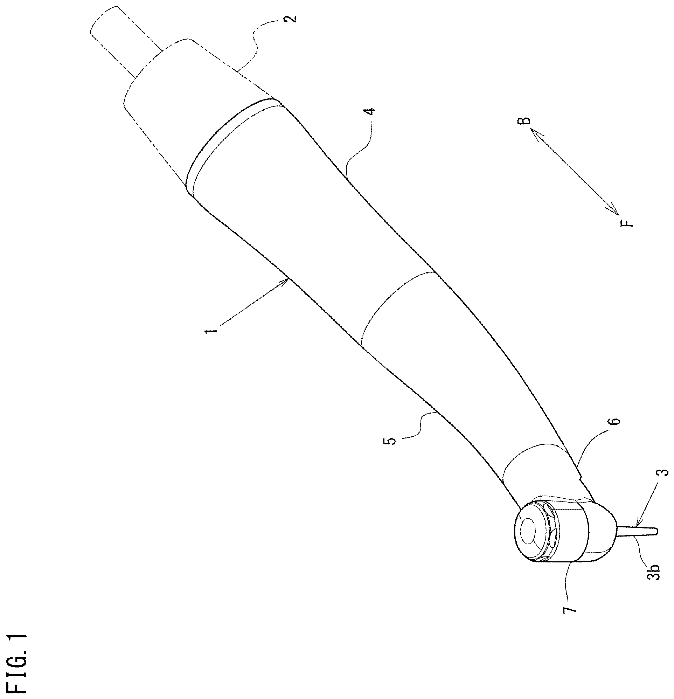

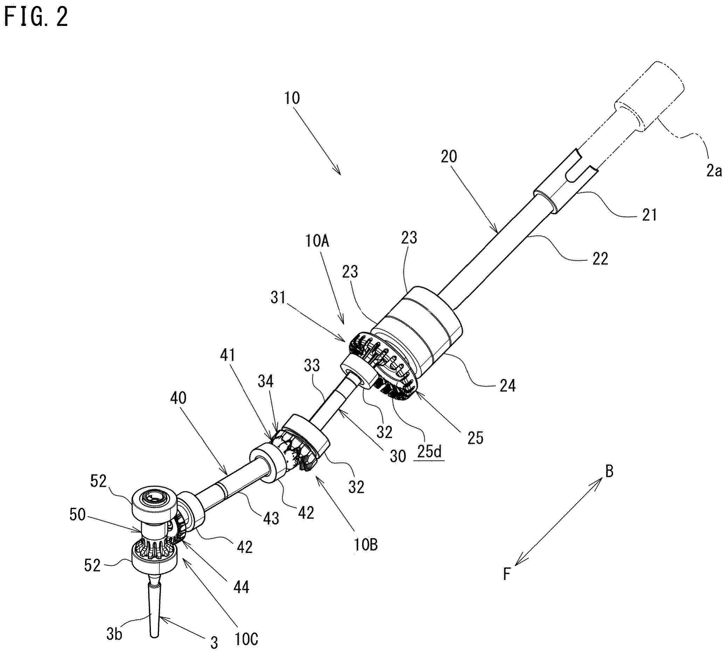

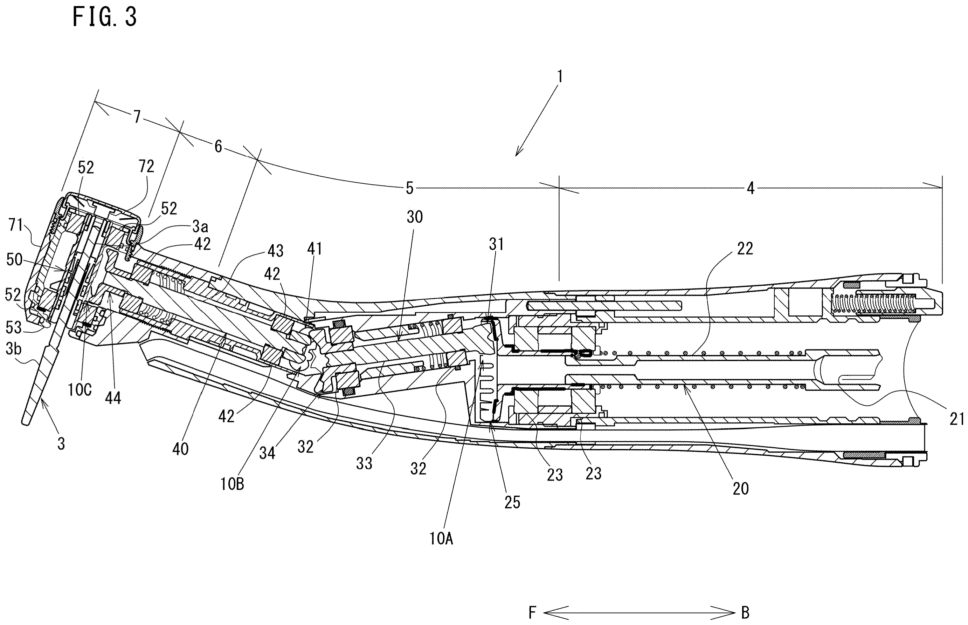

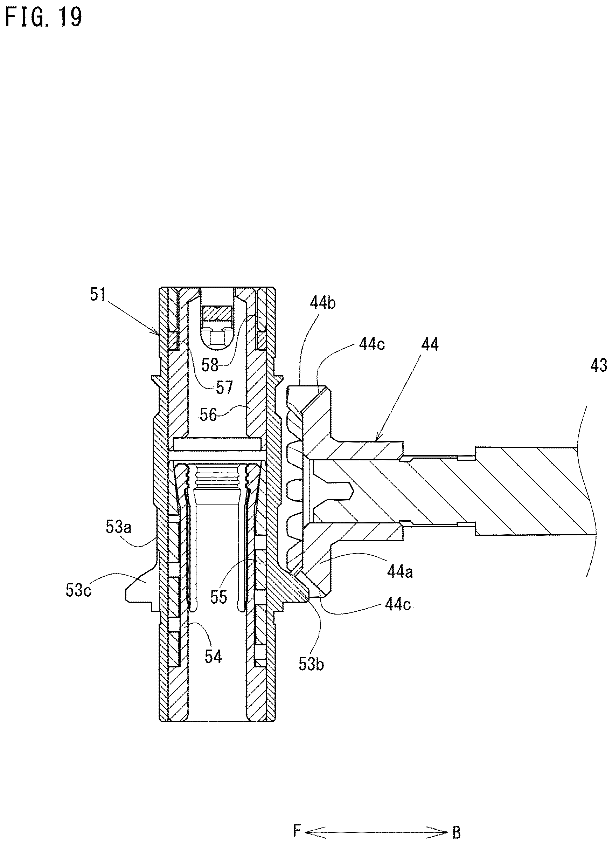

An overall configuration of such a motor handpiece will be described with reference to FIGS. 1 to 19.
First, an outline of the handpiece will be described with reference to FIGS. 1 and 2. The motor handpiece 1 is configured to increase the speed of the rotation of a drive unit 2a of a motor holder 2 connected to a proximal end side B by a rotation transmission mechanism 10 arranged inside and to rotate the cutting tool 3 held on a distal end side F in the longitudinal direction (left side in FIG 1) at a high speed.
Specifically, the rotation transmission mechanism 10 includes a first gear mechanism 10A, a second gear mechanism 10B, and a third gear mechanism 10C, and increases the speed of rotation input from the drive unit 2a at a predetermined rotation speed change rate in each of the gear mechanisms 10A, 10B, and 10C. Therefore, it is possible to cut an affected part by rotating the cutting tool 3 at a rotation speed obtained by increasing the rotation speed of the drive unit 2a at a predetermined rotation speed change rate. Details of the predetermined rotation speed change rate in each of the gear mechanisms 10A, 10B, and 10C will be described later.
Each element constituting the motor handpiece 1 will be described in detail below.
First, the motor holder 2 connected to the proximal end side B of the motor handpiece 1 will be described. The motor holder 2 is provided with the drive unit 2a configured by a rotationally driven motor (see FIG 2) inside and is configured to be detachable from the proximal end side B of the motor handpiece 1.
Next, the cutting tool 3 which is held by an internal mechanism of the head 7 of the motor handpiece 1 and rotates to cut a tooth will be described with reference to FIG 3.
As shown in FIG 3, the cutting tool 3 is integrally configured by a substantially columnar base shaft 3a which is one end held by the internal mechanism of the head 7 and a cutting blade portion 3b extending in a direction along the axial center of the base shaft 3a. For example, the cutting blade portion 3b is formed in a substantially truncated cone shape in which a cutting blade for cutting a tooth is formed. Of both ends of the cutting tool 3 in the direction along the axial center of the base shaft 3a, the side of the base shaft 3a is referred to as blade base side, and the distal end side of the cutting blade portion 3b is referred to as blade edge side.
As shown in FIGS. 1 and 3, the motor handpiece 1 that holds the cutting tool 3 by the internal mechanism of the head 7 and rotates the cutting tool 3 at a high speed includes a coupling portion 4, a body 5, a neck 6, and a head 7 from the proximal end side B (right side in FIG 1) toward the distal end side F (left side in FIG 1) in the longitudinal direction of the motor handpiece 1.

The coupling portion 4 is provided on the proximal end side B of the motor handpiece 1, having a hollow and substantially cylindrical body gradually reduced in diameter toward the distal end side F, and is configured to be detachable from the motor holder 2 on the proximal end side B.

The body 5 is a first main body, having a hollow and substantially cylindrical body connected to a distal end of the coupling portion 4 and constitutes a grip portion to be gripped by a user such as a practitioner or a maintenance worker. When the user holds the motor handpiece 1 with the cutting tool 3 on the lower side, the head 7 on the upper side, and the coupling portion 4 in a horizontal fashion, the body 5 bends upward at the central portion in the longitudinal direction and is gradually decreased in diameter toward the distal end side F. In other words, the body 5 bends the distal end side F from the central portion toward the base shaft 3a side (upper side in FIG 1) in the axial direction of a second rotary shaft 33 held by the head 7.

As a result, because the distal end side F of the motor handpiece 1 to be inserted into an oral cavity has a small diameter, the handleability in the treatment in a narrow oral cavity improves, and the load on a patient during the treatment can decrease. In addition, the practitioner can easily see caries which is an affected part.

The neck 6 is a second main body, having a hollow and substantially cylindrical body connected to a distal end of the body 5. The outer peripheral surfaces of the coupling portion 4, the body 5, and the neck 6 formed in this manner and arranged from the proximal end side B toward the distal end side F are made flush with each other.

The head 7 is connected to the body 5 via the neck 6 in a side view and is formed of a substantially cylindrical body in which a direction (vertical direction in FIG 1) substantially orthogonal to the longitudinal direction of the neck 6 is an axial direction.

The head 7 further includes a housing main body 71 and a cap 72, and a tool rotating mechanism 50 and a rotating mechanism holder 60 are accommodated therein.

The housing main body 71 is formed of a hollow and substantially cylindrical body extending along the longitudinal direction (vertical direction in FIG 1) of the cutting tool 3 to be attached. An upper end and a lower end of the housing main body 71 are open, and a screw thread with which the cap 72 can be screwed is provided at an upper end portion.

The cap 72 is a cap for attaching and detaching the cutting tool 3 to and from the head 7 internally provided with a slide portion slidable toward the blade edge side, and a detailed description thereof will be omitted here.

The head 7 accommodates, inside the housing main body 71, the tool rotating mechanism 50 that rotationally drives the held cutting tool 3 and the rotating mechanism holder 60 that holds the tool rotating mechanism 50 inside the head 7.

The head 7 formed in this manner has a function of holding one end of the base shaft 3a of the cutting tool 3 for cutting a tooth and a function of transmitting rotational drive force from the neck 6 to the cutting tool 3. Details of the configurations of the tool rotating mechanism 50 and the rotating mechanism holder 60 will be described later.

The coupling portion 4, the body 5, the neck 6, and the head 7 configured in this manner are arranged in this order from the proximal end side B toward the distal end side F, and the rotation transmission mechanism 10 for increasing the speed of the rotation input from the drive unit 2a of the motor holder 2 and transmitting the rotation to the cutting tool 3 is incorporated inside the integrally configured motor handpiece 1.

<Each Gear Mechanism>

The gear mechanisms will be described in detail. As described above, the first gear mechanism 10A, the second gear mechanism 10B, and the third gear mechanism 10C are provided in the rotation transmission mechanism 10 and increase and transmit the input rotation at a predetermined rotation speed change rate. As shown in FIGS. 2 and 3, the rotation transmission mechanism 10 includes a first rotating body 20, a second rotating body 30, a third rotating body 40, and the tool rotating mechanism 50.

The first rotating body 20, the second rotating body 30, the third rotating body 40, and the tool rotating mechanism 50 constituting the rotation transmission mechanism 10 are arranged in this order from the proximal end side B toward the distal end side F inside the motor handpiece 1.

Each of the first rotating body 20, the second rotating body 30, the third rotating body 40, and the tool rotating mechanism 50 will be described in detail below.

As shown in FIGS. 2 to 4, the first rotating body 20 includes a motor coupling portion 21, a first rotary shaft 22, two first bearings 23, a bearing spacer 24, and a drive gear 25.

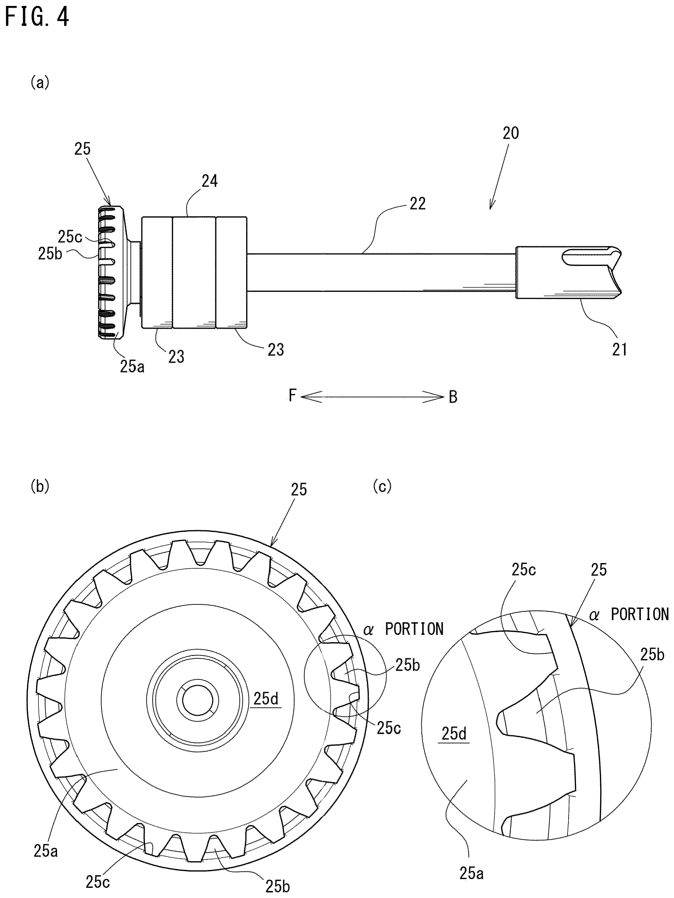

FIG 4(a) is a side view of the first rotating body 20, FIG 4(b) is a front view of the first rotating body 20, and FIG 4(c) is an enlarged front view of an $\alpha$ portion in FIG 4(b).

The motor coupling portion 21 is provided on the proximal end side B of the first rotary shaft 22 to be described later, has the proximal end side B open, and is formed in a tubular shape into which a shaft portion (not shown) of the drive unit 2a can be inserted. Inserting the shaft portion of the drive unit 2a from the proximal end side B into the motor coupling portion 21 configured in this manner can couple the drive unit 2a and the motor coupling portion 21.

As shown in FIG 3, the first rotary shaft 22 has a hollow and substantially columnar body formed in an elongated shape and is made of stainless steel and copper alloy. The first rotary shaft 22 is arranged along the longitudinal direction inside the coupling portion 4 and is formed to have substantially the same length as the length of the coupling portion 4 in the longitudinal direction.

As shown in FIGS. 3 and 4, the first bearings 23 are bearings each constituted by a ball bearing mounted near the end portion on the distal end side F of the first rotary shaft 22, and two first bearings are arranged at a predetermined interval in the longitudinal direction. Because the first bearings 23 are common ball bearings, a detailed description of the structure thereof will be omitted.

The bearing spacer 24 is provided between the first bearings 23 arranged at a predetermined interval in the longitudinal direction and can distribute a load on each of the first bearings 23.

As shown in FIG 4, the drive gear 25 is an internal gear made of stainless steel arranged at the end portion on the distal end side F of the first rotary shaft 22.

Specifically, as shown in FIGS. 4(a) and 4(b), the drive gear 25 is an internal gear having a plurality of teeth arranged at predetermined equal intervals along a peripheral edge portion having a circular shape in a front view as viewed from the distal end side F of the first rotary shaft 22 and protruding toward the center of a circle and the distal end side F and is also a bevel gear.

As shown in FIGS. 4(a) and 4(b), the drive gear 25 includes a substantially disk-shaped gear main body 25a and drive gear teeth 25b arranged along the peripheral edge portion on the distal end side F of the gear main body 25a. A drive gear groove 25c is formed between the drive gear teeth 25b.

The gear main body 25a has a disk shape and has a diameter of approximately four times the outer diameter of the first rotary shaft 22.

The drive gear teeth 25b each has a triangular shape protruding radially inward in a front view as viewed from the distal end side F, which is formed in a substantially triangular prism shape protruding toward the center of the circle and the distal end side F. A plurality of drive gear teeth 25b each formed in a substantially triangular prism shape in this manner are arranged at predetermined equal intervals in the circumferential direction along the outer peripheral edge of the gear main body 25a of a circular shape in a front view. In the present embodiment, the drive gear 25 is provided with 23 drive gear teeth 25b.

As described above, the drive gear groove 25c is formed between the plurality of drive gear teeth 25b arranged at predetermined equal intervals in the circumferential direction along the outer peripheral edge of the gear main body 25a. The drive gear groove 25c has a triangular prism-like groove shape protruding radially outward in a front view as viewed from the distal end side F and is formed in a substantially semicircular involute shape along the radial direction in a side view.

The drive gear 25 configured in this manner is surrounded by the gear main body 25a and the drive gear teeth 25b on the distal end side F, in which the distal end side F is open, and a drive gear space 25d communicating with the drive gear groove 25c is formed.

In a state where the first rotating body 20 in which each element is configured in this manner is assembled inside the motor handpiece 1 as the rotation transmission mechanism 10, the motor coupling portion 21 and the first rotary shaft 22 are arranged inside the coupling portion 4, as shown in FIG 3. The first bearing 23 and the bearing spacer 24 are arranged across the boundary between the coupling portion 4 and the body 5, and the drive gear 25 protrudes from the coupling portion 4 to the distal end side F and is incorporated in the proximal end portion of the body 5.

In the first rotating body 20, the first rotary shaft 22 is rotatably supported inside the coupling portion 4.

The second rotating body 30 is arranged between the first rotating body 20 and the third rotating body 40 in the rotation transmission mechanism 10, increases the rotation speed of the drive unit 2a transmitted to the first rotating body 20, and transmits the increased rotation speed to the third rotating body 40 provided on the distal end side F.

As shown in FIGS. 3 and 5 to 8, the second rotating body 30 includes a pinion gear 31 provided at the end portion on the proximal end side B of the second rotary shaft 33 described later, a second rotary shaft 33 having an elongated shape, a second bearing 32 attached to the proximal end side B and the distal end side F of the second rotary shaft 33, and a bevel gear 34 provided at the end portion on the distal end side F of the second rotary shaft 33.

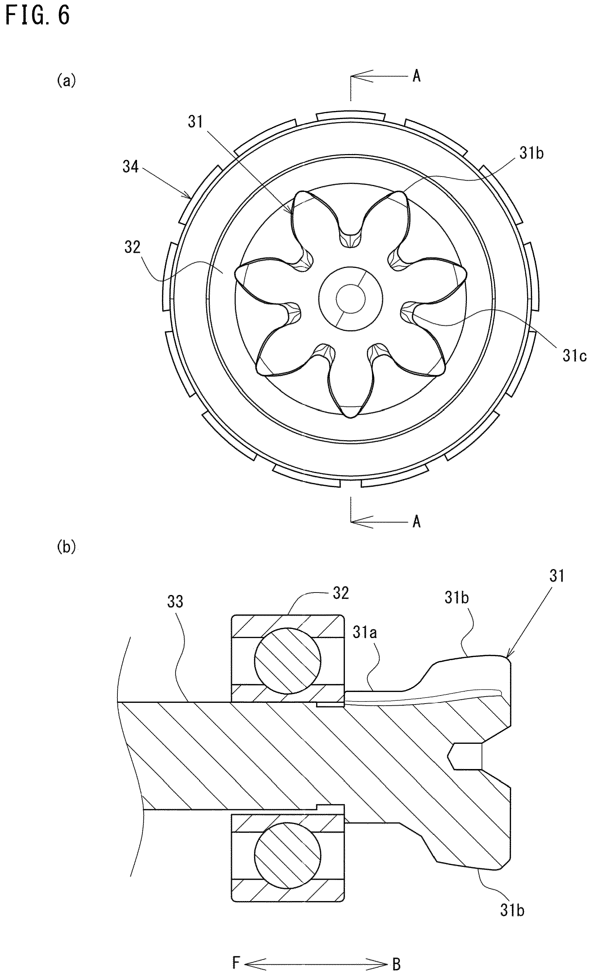

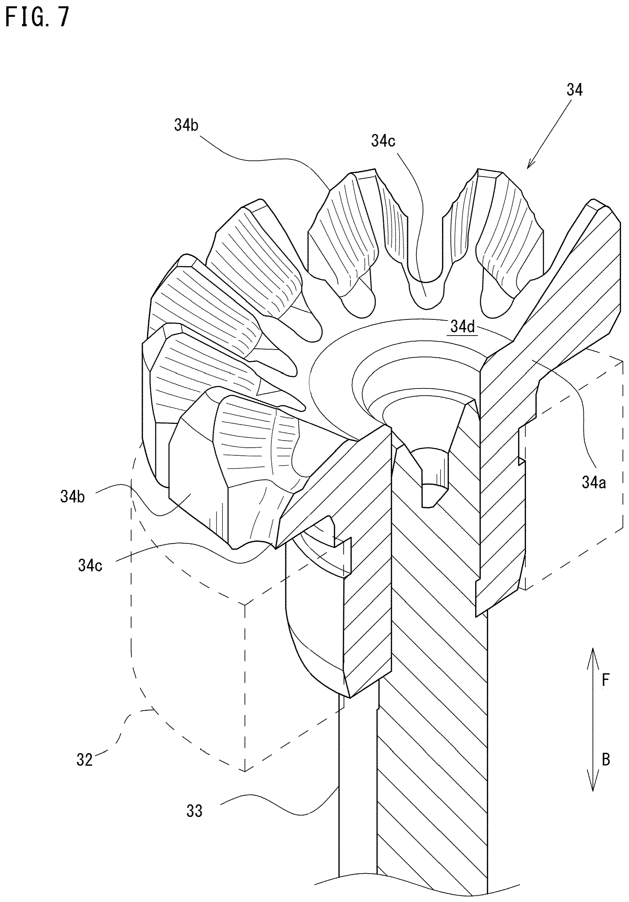

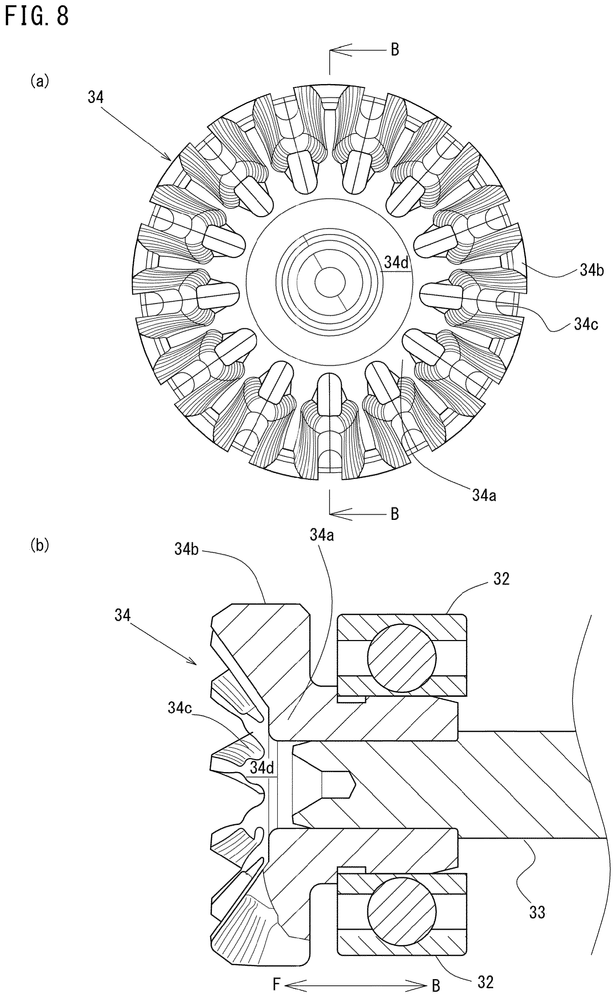

FIG 6(a) is a rear view of the pinion gear 31, and FIG 6(b) is a cross-sectional view taken along the line A-A in FIG 6(a). FIG 8(a) is a front view of the bevel gear 34, and FIG 8(b) is a cross-sectional view taken along the line B-B in FIG 8(a). In FIG 7, the illustration of the second bearing 32 is omitted.

The pinion gear 31 is a driven gear with respect to the drive gear 25 which is a drive gear provided in the first rotating body 20, is an external gear having a predetermined number of gear teeth as shown in FIG 6(a) and is also a bevel gear.

The pinion gear 31 is provided at the end portion on the proximal end side B of the second rotary shaft 33 described later, in which a columnar portion 31a and a pinion teeth 31b are provided, and a pinion groove 31c is formed between the pinion teeth 31b.

The columnar portion 31a is a substantially columnar body extending toward the proximal end side B along the longitudinal direction of the second rotary shaft 33 and is integrally formed with the second rotary shaft 33.

As shown in FIGS. 6(a) and 6(b), the pinion teeth 31b are arc-shaped external teeth protruding radially outward from the outer peripheral surface of the columnar portion 31a, and are provided from a central portion in the longitudinal direction of the columnar portion 31a over the end portion on the proximal end side B.

Specifically, as shown in FIG 6(a), the pinion teeth 31b are each formed in an involute shape with a sharp tip when viewed from the proximal end side B in the longitudinal direction.

The plurality of pinion teeth 31b configured in this manner are provided at predetermined equal intervals along the circumferential direction of the columnar portion 31a. In the present embodiment, the pinion gear 31 is provided with seven pinion teeth 31b.

The pinion groove 31c is formed between the pinion teeth 31b arranged at predetermined equal intervals in the circumferential direction and is formed as a groove in which the outer surface of the columnar portion 31a is recessed in a semicircular cross section. The pinion groove 31c is formed over the entire length of the columnar portion 31a in the longitudinal direction.

The second bearing 32 is a bearing mounted on the distal end side F and the proximal end side B of the second rotary shaft 33 described later and has the same configuration as the first bearing 23 mounted on the first rotating body 20 described above, therefore, a detailed description thereof will be omitted.

As shown in FIG 3, the second rotary shaft 33 is a substantially columnar body having a solid shape formed in an elongated shape and is made of stainless steel and copper alloy similarly to the first rotary shaft 22. The second rotary shaft 33 is formed to have a smaller diameter than the first rotary shaft 22. Specifically, in the present embodiment, the outer diameter of the second rotary shaft 33 is configured to be approximately 0.6 times the outer diameter of the first rotary shaft 22.

The length of the second rotary shaft 33 configured in this manner is formed to be about two-thirds of the length of the body 5 in the longitudinal direction.

The second rotary shaft 33 is arranged along the longitudinal direction inside the body 5 in a state of being arranged inside the motor handpiece 1 as the rotation transmission mechanism 10. The second rotary shaft 33 is incorporated in a central portion in the longitudinal direction of the body 5.

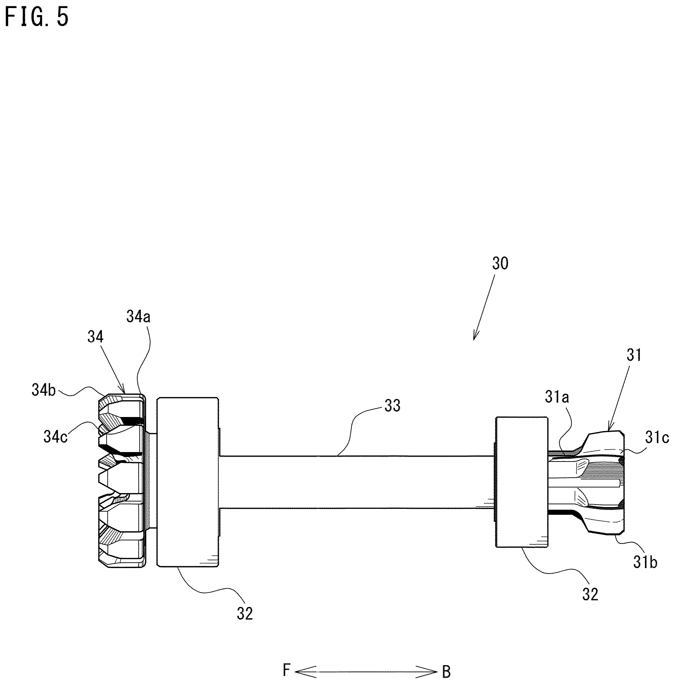

As shown in FIGS. 5, 7, and 8, the bevel gear 34 is a bevel gear made of stainless steel for transmitting the rotation of the drive unit 2a transmitted from the first rotating body 20 to the third rotating body 40 having a different axial direction.

Specifically, as shown in FIGS. 5, 7, and 8, the bevel gear 34 is an internal gear provided at the end portion on the distal end side F of the second rotary shaft 33 and is also a bevel gear. A bevel gear main body 34a having a disk shape when viewed from the distal end side F and bevel gear teeth 34b are provided, and a bevel gear groove 34c is formed between the bevel gear teeth 34b.

The bevel gear main body 34a has a disk shape having a smaller diameter than the gear main body 25a constituting the drive gear 25 of the first rotating body 20 and a larger diameter than the columnar portion 31a constituting the pinion gear 31.

The bevel gear teeth 34b are provided along the outer peripheral edge of the bevel gear main body 34a. The bevel gear teeth 34b are each formed in a right-angled triangular shape in cross section in which a radially outer side that is flush with the radially outer surface of the bevel gear main body 34a is a height direction protruding to the distal end side F, and the distal end side F is an inclined direction gradually inclined to the proximal end side B toward the radially inner side.

In addition, the bevel gear teeth 34b are each formed in a substantially pentagonal shape in which about a half of the distal end side F in the longitudinal direction is narrowed toward the distal end side F when viewed from the radially outer side.

A plurality of bevel gear teeth 34b formed in such a shape is provided at predetermined equal intervals in the circumferential direction along the outer peripheral edge of the bevel gear main body 34a. In the present embodiment, the bevel gear 34 is provided with 13 bevel gear teeth 34b.

The bevel gear groove 34c is formed between the bevel gear teeth 34b formed in the above-described shape. The bevel gear groove 34c forms a clearance groove by cutting out a radially outer peripheral edge of the bevel gear main body 34a in the longitudinal direction.

In addition, the bevel gear 34 configured in this manner is surrounded by the bevel gear main body 34a and the bevel gear teeth 34b on the distal end side F, in which the distal end side F is open, and a bevel gear space 34d communicating with the bevel gear groove 34c is formed.

In the rotation transmission mechanism 10, the third rotating body 40 is arranged between the second rotating body 30 and the tool rotating mechanism 50, and meshes with the bevel gear 34 provided at the end portion on the distal end side F of the second rotary shaft 33 of the second rotating body 30 to transmit the rotation of the drive unit 2a to the distal end side F.

As shown in FIGS. 3, 5, and 9 to 12, the third rotating body 40 includes a middle gear 41 provided at the end portion on the proximal end side B of the third rotary shaft 43, an elongated third rotary shaft 43, a third bearing 42 attached to the proximal end side B and the distal end side F of the third rotary shaft 43, and a double speed gear 44 provided at the end portion on the distal end side F of the third rotary shaft 43.

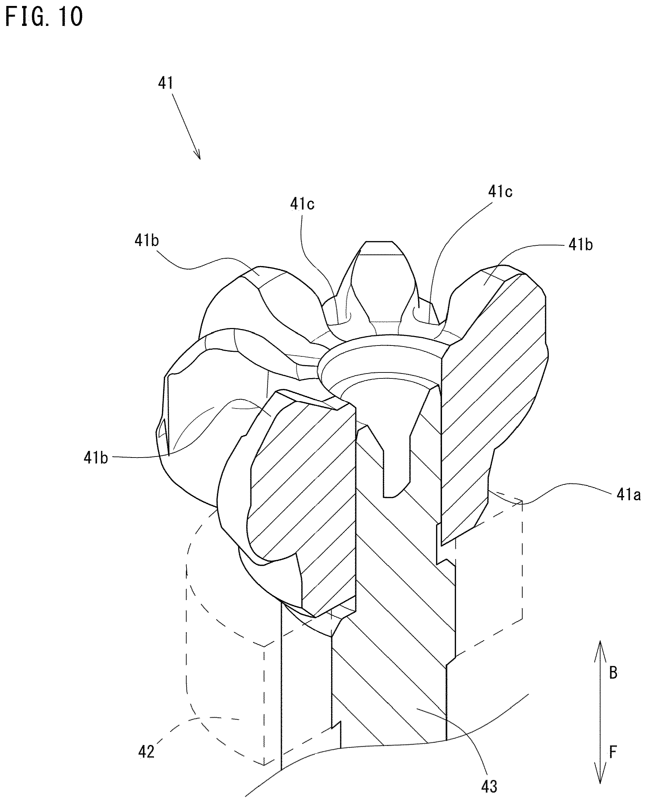

FIG 10 is a partial cross-sectional perspective view showing a cut surface cut along the radial direction in such a manner as to pass through the top of the tooth tip of the middle gear tooth 41b, and illustration of the third bearing 42 is omitted.

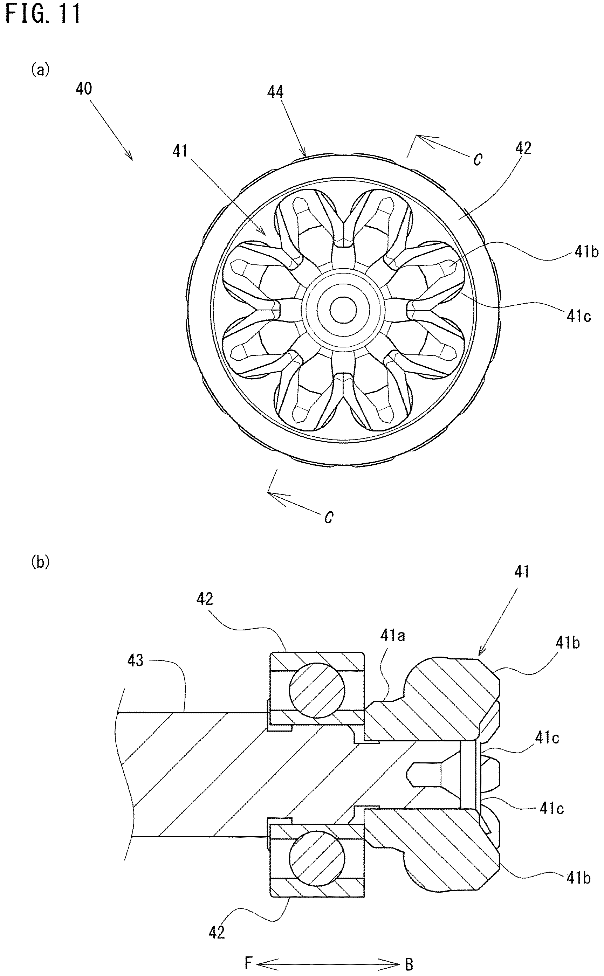

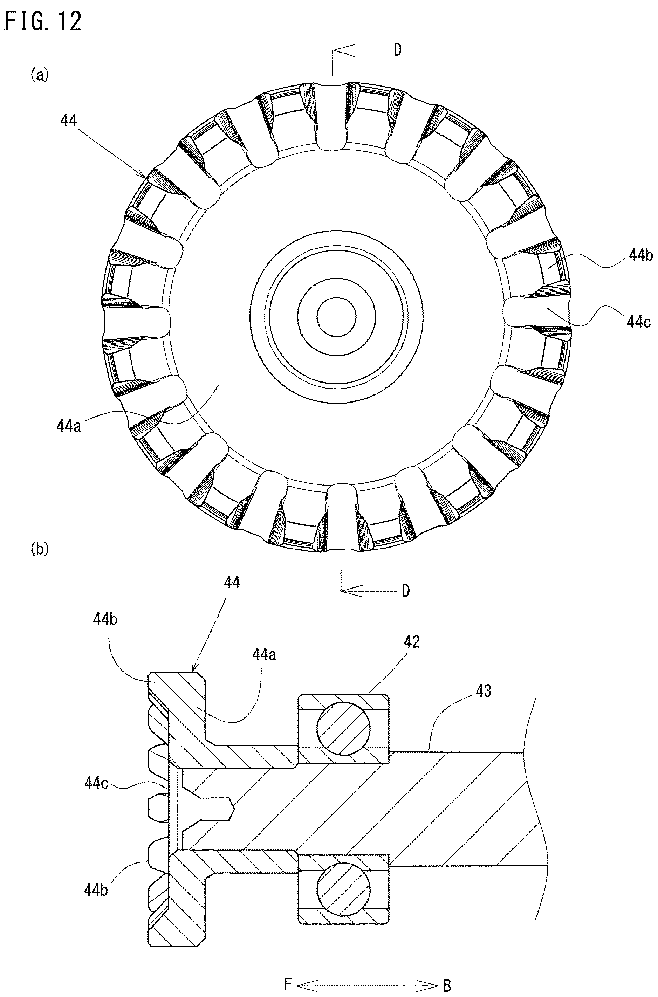

FIG 11(a) is a rear view of the middle gear 41, and FIG 11(b) is a cross-sectional view taken along the line C-C in FIG 11(a). Similarly, FIG 12(a) is a front view of the double speed gear 44, and FIG 12(b) is a cross-sectional view taken along the line D-D in FIG 12(a).

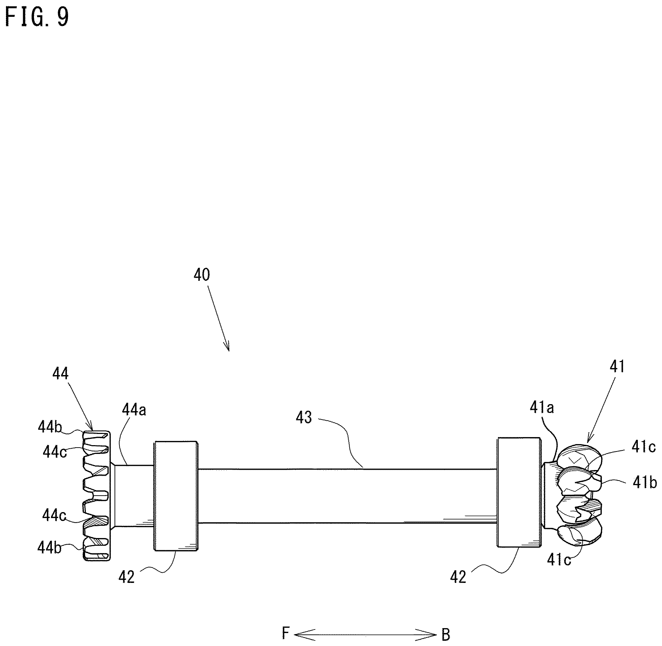

The middle gear 41 is a driven gear with respect to the bevel gear 34 which is a drive gear provided in the second rotary shaft 33 and is provided at the end portion on the proximal end side B of the third rotary shaft 43 as shown in FIGS. 9 to 11. The middle gear 41 is an external gear made of stainless steel having teeth protruding toward the proximal end side B on the radially outer side, and is also a bevel gear.

Specifically, as shown in FIGS. 9 to 11, the middle gear 41 includes a cylindrical portion 41a having a substantially cylindrical shape and a middle gear teeth 41b, in which a middle gear groove 41c is formed between the middle gear teeth 41b.

As shown in FIG 10, the middle gear teeth 41b are formed in a substantially elliptical shape in such a manner as to protrude from the outer surface of the cylindrical portion 41a toward the proximal end side B and radially outward. In this manner, a plurality of middle gear teeth 41b each formed in a substantially ellipsoid shape is arranged at predetermined equal intervals in the circumferential direction with respect to the outer peripheral surface of the cylindrical portion 41a.

In the present embodiment, the middle gear 41 is provided with eight middle gear teeth 41b. The middle gear 41 provided with the plurality of middle gear teeth 41b is formed to be larger in diameter than the pinion gear 31 of the second rotating body 30 described above.

In addition, the middle gear groove 41c is formed between the middle gear teeth 41b arranged at predetermined equal intervals such that the cylindrical portion 41a is recessed radially outward in an arc shape toward the distal end side F. That is, the middle gear groove 41c formed between the middle gear teeth 41b is formed in a semicircular groove shape that gradually extends radially outward toward the distal end side F.

The third bearing 42 is a bearing mounted on the distal end side F and the proximal end side B of the third rotary shaft 43 and has the same configuration as the first bearing 23 and the second bearing 32, therefore, a detailed description thereof will be omitted.

As shown in FIGS. 3, 10, and 11, the third rotary shaft 43 is a substantially columnar body having a solid shape. The third rotary shaft 43 is made of stainless steel. The third rotary shaft 43 is larger in diameter than the second rotary shaft 33 and smaller in diameter than the first rotary shaft 22. Specifically, the third rotary shaft 43 is formed to have an outer diameter of about 1.2 times the outer diameter of the second rotary shaft 33 formed to have an outer diameter of about 0.6 times the outer diameter of the first rotary shaft 22.

In addition, the third rotary shaft 43 is formed to have a length about twice the length of the neck 6 in the longitudinal direction. In a state where the third rotary shaft 43 is arranged inside the motor handpiece 1 as the rotation transmission mechanism 10, the distal end portion of the third rotary shaft 43 is arranged inside the neck 6, and the proximal end portion of the third rotary shaft 43 is arranged inside the body 5.

The double speed gear 44 is a bevel gear for transmitting the rotation of the motor holder 2 transmitted from the second rotating body 30 to the tool rotating mechanism 50 having a different axial direction to rotate the cutting tool 3 mounted on the tool rotating mechanism 50.

The double speed gear 44 includes a double speed gear main body 44a having a substantially disk shape when viewed from the distal end side F, and a double speed gear tooth 44b protruding toward the distal end side F. A plurality of double speed gear teeth 44b are provided at predetermined equal intervals along the peripheral edge portion of the substantially disk-shaped double speed gear main body 44a.

The double speed gear main body 44a has a disk shape having a smaller diameter than the bevel gear main body 34a constituting the bevel gear 34 of the second rotating body 30 and a larger diameter than the cylindrical portion 41a constituting the middle gear 41.

The double speed gear tooth 44b is formed in a partially inclined trapezoidal shape in which the radially outer side is along the longitudinal direction and the radially outer side is inclined in the tapered direction toward the distal end side F in the cross section along the longitudinal direction.

When viewed from the front side in the longitudinal direction, the double speed gear tooth 44b is formed in a fan shape in which the radially outer side is slightly wider than the radially inner side.

In the present embodiment, the double speed gear 44 is provided with 16 double speed gear teeth 44b.

The double speed gear groove portion 44c is formed between the plurality of double speed gear teeth 44b arranged at predetermined equal intervals in the circumferential direction along the peripheral edge portion of the double speed gear main body 44a as described above. The double speed gear groove portion 44c is formed deeper than the main surface on the distal end side F of the double speed gear main body 44a.

<Tool Rotating Mechanism>

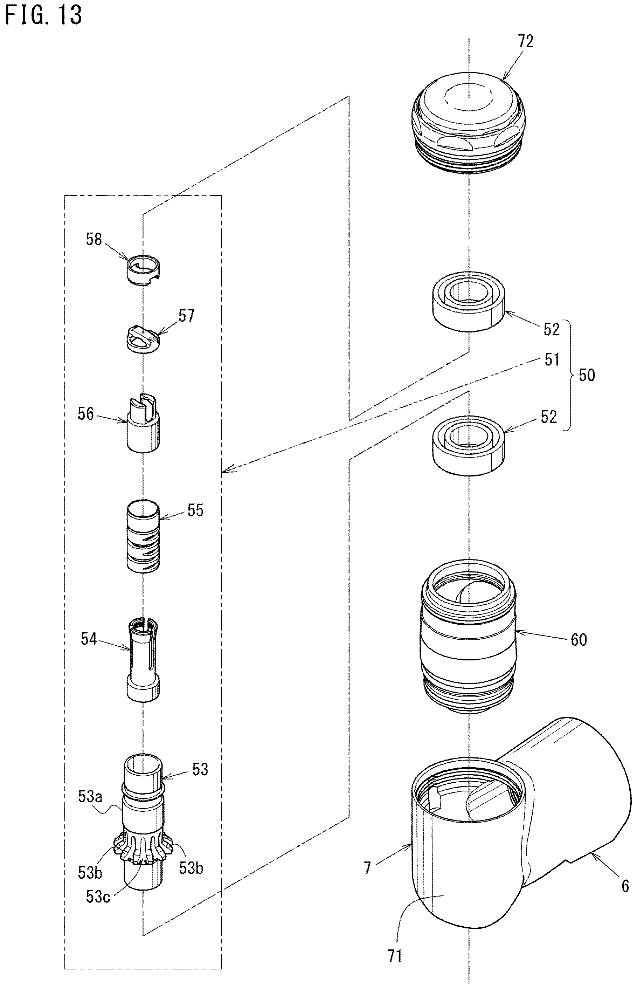

The tool rotating mechanism 50 will be described in detail. As shown in FIG 13, the tool rotating mechanism 50 is arranged inside the head 7 and connected to the third rotating body 40. The tool rotating mechanism 50 includes a tool holder 51 and a head bearing 52.

The tool holder 51 incorporates a mechanism for detachably holding the cutting tool 3 and is configured to rotate about a rotation axis along the longitudinal direction of the cutting tool 3 as a rotation center.

As shown in FIG 13, the tool holder 51 includes a substantially cylindrical head-side gear 53 extending along the longitudinal direction (vertical direction in FIG 13) of the cutting tool 3, a chuck 54, a spring 55, a slide body 56, a first stopper 57, and a second stopper 58.

The chuck 54, the spring 55, the slide body 56, the first stopper 57, and the second stopper 58 are accommodated in the head-side gear 53 in this order from the blade edge side (lower side in FIG 13) toward the blade base side (upper side in FIG 13) of the cutting tool 3.

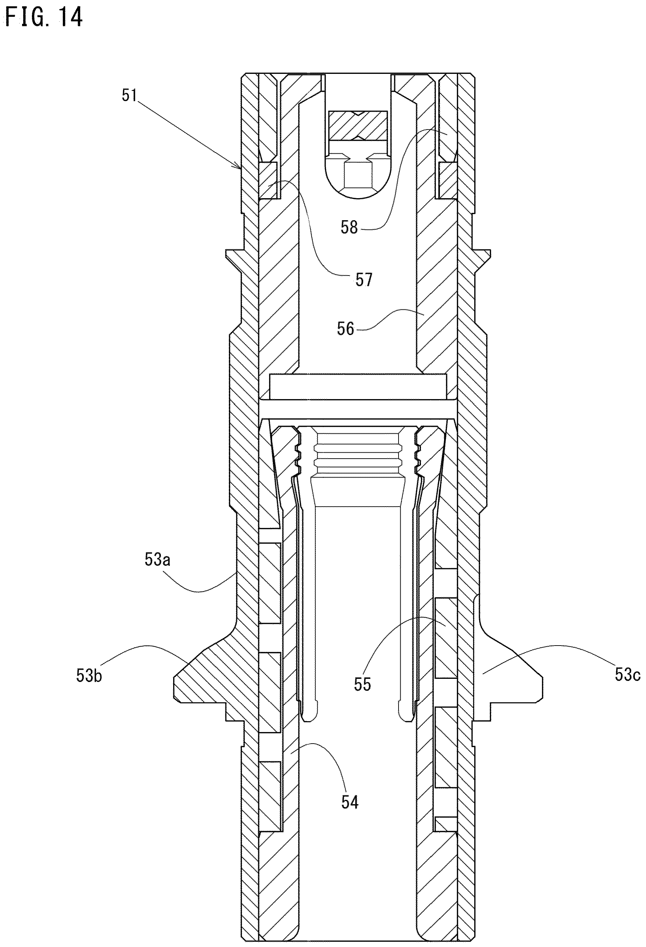

As shown in FIGS. 13 and 14, the head-side gear 53 is a head-side gear formed in a cylindrical shape. Specifically, the head-side gear 53 has a substantially cylindrical shape having an inner diameter capable of accommodating the chuck 54, the spring 55, the slide body 56, the first stopper 57, and the second stopper 58, and an outer diameter capable of being fitted to the inner ring of the head bearing 52.

Furthermore, the head-side gear 53 can convert the rotation of the third rotating body 40 around an axis along the longitudinal direction of the neck 6 as a rotation axis into the rotation of the tool rotating mechanism 50 around an axis along the longitudinal direction of the cutting tool 3 (vertical direction in FIG 13) as a rotation axis.

As shown in FIGS. 13 and 14, the head-side gear 53 is a bevel gear including a shaft body 53a having a substantially cylindrical body, a head-side gear teeth 53b, in which a head-side gear groove 53c is formed between the head-side gear teeth 53b.

The shaft body 53a has a substantially cylindrical body that can be accommodated in the rotation mechanism holder 60.

The head-side gear tooth 53b protrudes radially outward from the outer peripheral surface of the shaft body 53a, and the surface on the blade edge side in a cross-sectional view is inclined downward as it goes radially outward.

A plurality of head-side gear teeth 53b configured in this manner are provided at predetermined equal intervals along the outer periphery of the shaft body 53a. In the present embodiment, the head-side gear 53 is provided with 12 head-side gear teeth 53b.

The head-side gear groove 53c is formed between the head-side gear teeth 53b such that the outer peripheral surface of the shaft body 53a is recessed radially inward in a semicircular shape along the longitudinal direction of the shaft body 53a.

The head-side gear 53 provided with the plurality of head-side gear teeth 53b in this manner is a bevel gear and can constitute a driven gear that meshes with the double speed gear 44 of the third rotating body 40.

As shown in FIG 13, the chuck 54 is disposed on the blade edge side (lower side) with respect to the substantially center in the longitudinal direction of the cutting tool 3 inside the head-side gear 53. The chuck 54 is configured to be able to hold the base shaft 3a of the cutting tool 3 inserted along the longitudinal direction of the cutting tool 3.

The spring 55 is a compression spring deformable in the compression direction and is externally fitted to the upper portion of the chuck 54 inside the head-side gear 53 as shown in FIG 13.

As shown in FIG 13, the slide body 56 has a substantially columnar shape, is accommodated on the axial end side with respect to the spring 55, and is configured to be able to press the spring 55.

In the tool holder 51 configured in this manner, the spring 55 before being compressed and deformed presses the vicinity of the end portion on the blade base side of the chuck 54, and the chuck 54 whose diameter is reduced by the pressing of the spring 55 can hold the cutting tool 3. When the spring 55 is compressed and deformed, the holding of the cutting tool 3 by the chuck 54 can be released.

As shown in FIG 13, the first stopper 57 and the second stopper 58 are formed in a substantially ring shape and are externally fitted to the portion on the axial end side of the slide body 56 in this order from the blade edge side of the cutting tool 3. The first stopper 57 and the second stopper 58 restrict the cap 72 from sliding toward the blade edge side.

The head bearing 52 is formed in a substantially ring shape, and rotatably supports the blade edge side end portion and the blade base side end portion of the tool holder 51 inside the rotating mechanism holder 60.

<Rotating Mechanism Holder>

As shown in FIG 13, the rotating mechanism holder 60 is configured to hold the tool rotating mechanism 50 configured as described above inside the housing main body 71 in the head 7 integrally configured with the neck 6. In addition, the tool rotating mechanism 50 accommodated in the housing main body 71 by the rotating mechanism holder 60 is arranged such that its rotation axis is substantially orthogonal to the rotation axis of the third rotating body 40.

<Assembly>

When the rotation transmission mechanism 10 in which each of the first rotating body 20, the second rotating body 30, the third rotating body 40, and the tool rotating mechanism 50 is configured as described above is arranged inside the motor handpiece 1, the first rotating body 20 is arranged inside the coupling portion 4. The second rotating body 30 is arranged approximately inside the body 5, the third rotating body 40 is arranged approximately inside the neck 6, and the tool rotating mechanism 50 is arranged inside the head 7.

At this time, the pinion gear 31 of the second rotating body 30 is arranged in the drive gear space 25d of the drive gear 25 of the first rotating body 20, and the drive gear 25 and the pinion gear 31 mesh with each other. This configures the first gear mechanism 10A.

In addition, the middle gear 41 of the third rotating body 40 is arranged in the bevel gear space 34d of the bevel gear 34 of the second rotating body 30, and the bevel gear 34 and the middle gear 41 mesh with each other. This configures the second gear mechanism 10B.

Further, the double speed gear 44 of the third rotating body 40 and the head-side gear 53 of the tool rotating mechanism 50 mesh with each other. This configures the third gear mechanism 10C.

The meshing of each of the gears as described above couples the first rotating body 20, the second rotating body 30, the third rotating body 40, and the tool rotating mechanism 50 in such a manner as to be able to transmit rotation, whereby the rotation transmission mechanism 10 can be configured.

<Operation>

Next, based on the rotation transmission mechanism 10 configured in this manner, an operation of transmitting the rotation of the drive unit 2a that is rotationally driven as the rotation of the cutting tool 3 attached to the distal end side F will be briefly described.

First, the drive unit 2a provided inside the motor holder 2 is a motor having a typical rotation speed used for a dental handpiece, and the maximum rotation speed per minute is 40,000 rpm.

Connecting the motor holder 2 to the motor handpiece 1, that is, connecting the coupling portion 4 to the motor holder 2 couples the drive portion 2a provided inside the motor holder 2 and the motor coupling portion 21 of the first rotating body 20 incorporated in the coupling portion 4.

This enables the first rotary shaft 22 to rotate at the same speed as the drive unit 2a. Therefore, the drive gear 25 provided on the distal end side F of the first rotary shaft 22 also rotates at the same speed as the drive unit 2a.

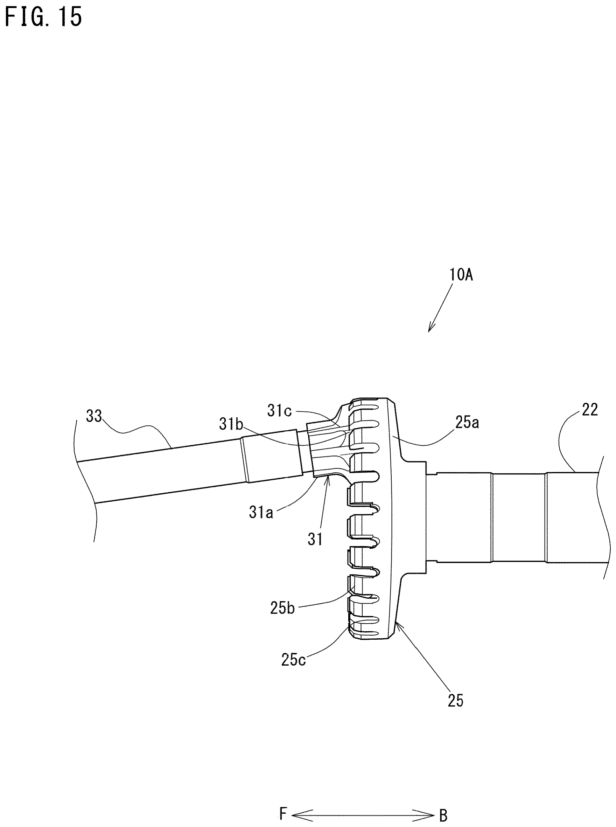

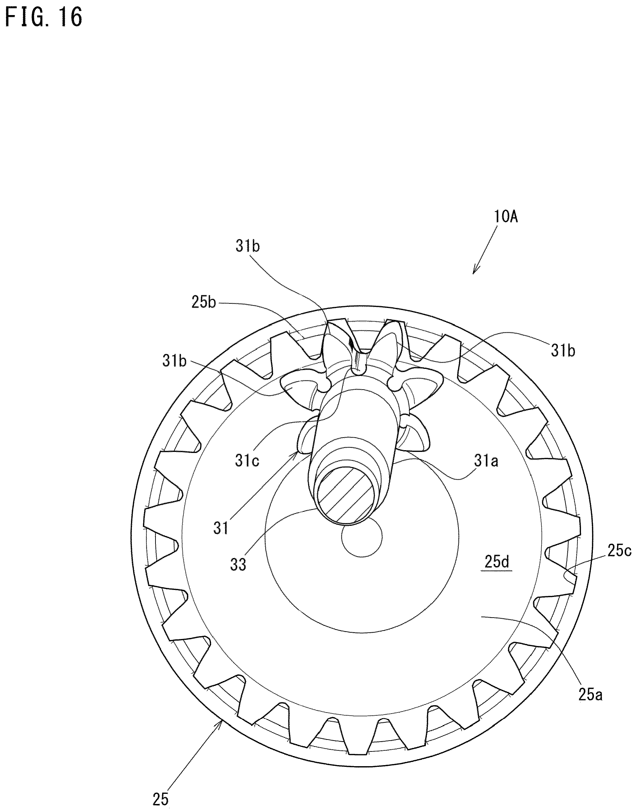

As shown in FIGS. 15 and 16, the pinion gear 31 is arranged on the upper side of the drive gear space 25d in the drive gear 25, and the pinion teeth 31b of the pinion gear 31 and the drive gear teeth 25b of the drive gear 25 mesh with each other in the radial inward and outward directions of the pinion gear 31.

FIG 16 is viewed from the distal end side F along the longitudinal direction of the first rotary shaft 22.

At this time, the pinion gear 31 is in a position in which the rotation axis direction thereof is inclined at a predetermined angle with respect to the rotation axis direction of the drive gear 25. Therefore, the drive gear teeth 25b of the drive gear 25 and the pinion teeth 31b of the pinion gear 31 mesh with each other in an inclined state. In the present embodiment, the meshing is performed with an inclination of about 10 degrees. Therefore, the second rotating body 30 is arranged in such a manner as to be bent toward the blade edge side such that the axial direction thereof forms an angle of 170 degrees with respect to the axial direction of the first rotating body 20.

In the drive gear 25 and the pinion gear 31 meshed in this manner, the second rotating body 30 rotates with an increased speed with respect to the first rotating body 20 because the number of pinion teeth 31b of the pinion gear 31 is smaller than the number of drive gear teeth 25b of the drive gear 25.

In the present embodiment, because the number of the drive gear teeth 25b of the drive gear 25 is 23 and the number of the pinion teeth 31b of the pinion gear 31 is 7, the rotation speed of the second rotating body 30 is increased to about 3.29 times the rotation speed of the first rotating body 20. That is, the second rotating body 30 is increased in speed with respect to the first rotating body 20 that rotates at the same speed as the drive unit 2a of the motor having the maximum rotation speed of 40,000 rpm, and the maximum rotation speed of the second rotating body 30 is approximately 130,000 rpm.

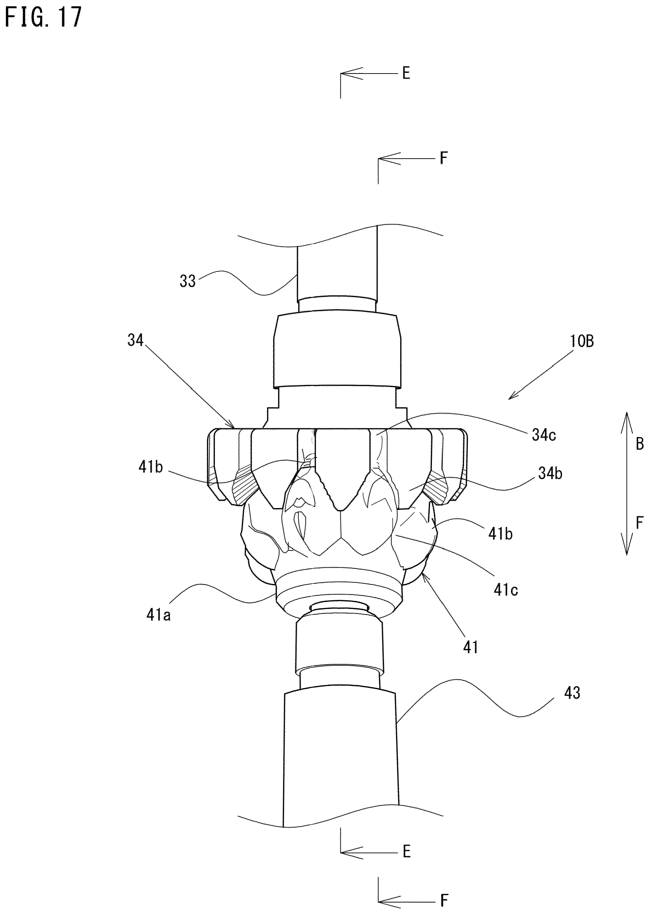

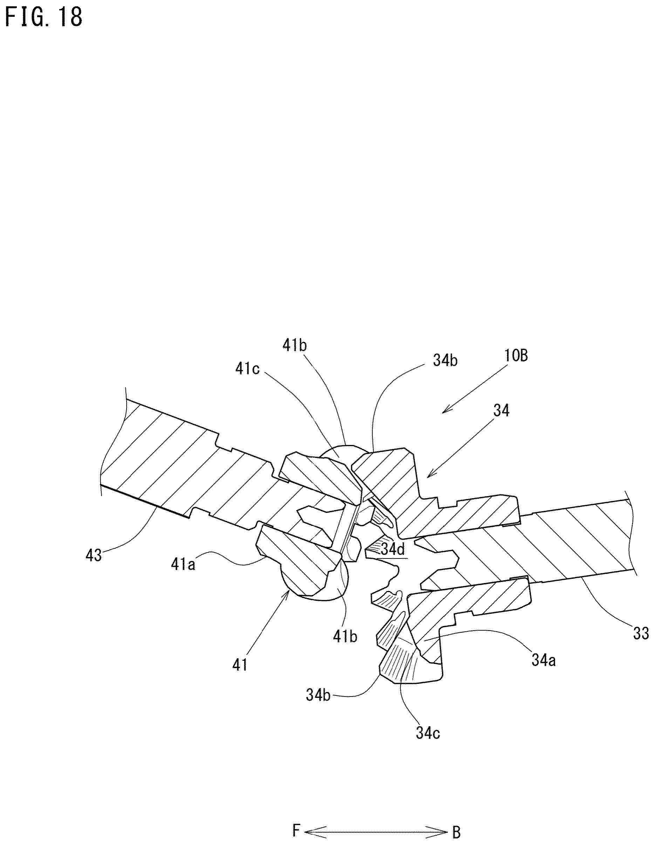

As shown in FIGS. 17 and 18, the middle gear 41 provided at the end portion on the proximal end side B of the third rotating body 40 and arranged in the bevel gear space 34d meshes with the bevel gear 34 provided at the end portion on the distal end side F of the second rotary shaft 33 in the second rotating body 30 that rotates at an increased speed with respect to the first rotating body 20 as described above.

Therefore, the second gear mechanism 10B that transmits the rotation of the second rotating body 30 to the third rotating body 40 is configured, and the rotation of the second rotating body 30 can be transmitted to the third rotating body 40 via the bevel gear 34 and the middle gear 41.

Specifically, as shown in FIGS. 3, 17, and 18, the middle gear 41 is arranged on the upper side of the bevel gear space 34d in the bevel gear 34, and the pinion teeth 31b of the pinion gear 31 and the bevel gear teeth 34b of the bevel gear 34 mesh with each other in the radial inward and outward directions of the pinion gear 31.

At this time, the middle gear 41 is in a position in which the rotation axis direction thereof is inclined at a predetermined angle with respect to the rotation axis direction of the bevel gear 34. Therefore, the bevel gear teeth 34b of the bevel gear 34 mesh with the pinion teeth 31b of the pinion gear 31 in an inclined state. In the present embodiment, the meshing is performed with an inclination of about 30 degrees. Therefore, the third rotating body 40 is arranged in such a manner as to be bent toward the blade base side such that the axial direction thereof forms an angle of 150 degrees with respect to the axial direction of the second rotating body 30.

In the bevel gear 34 and the middle gear 41 meshed in this manner, the third rotating body 40 rotates at an increased speed with respect to the second rotating body 30 because the number of the middle gear teeth 41b of the middle gear 41 is smaller than the number of the bevel gear teeth 34b of the bevel gear 34.

In the present embodiment, because the number of the bevel gear teeth 34b of the bevel gear 34 is 13 and the number of the middle gear teeth 41b of the middle gear 41 is 8, the rotation speed of the third rotating body 40 is increased to about 1.63 times the rotation speed of the second rotating body 30. That is, the maximum rotation speed is further increased with respect to the second rotating body 30 whose maximum rotation speed is increased to 130,000 rpm, and the maximum rotation speed of the third rotating body 40 is about 212,000 rpm.

Next, as shown in FIGS. 2 and 3, the double speed gear 44 provided at the end portion on the distal end side F of the third rotary shaft 43 in the third rotating body 40 that rotates at an increased speed with respect to the second rotating body 30 meshes with the head-side gear 53 provided in the tool holder 51 of the tool rotating mechanism 50 inside the head 7.

Therefore, the third gear mechanism 10C that transmits the rotation of the third rotating body 40 to the tool rotating mechanism 50 is configured, and the rotation of the third rotating body 40 can be transmitted to the tool rotating mechanism 50 via the double speed gear 44 and the head-side gear 53.

Specifically, as shown in FIGS. 2 and 3, the double speed gear teeth 44b of the double speed gear 44 mesh with the head-side gear teeth 53b protruding radially outward from the outer peripheral surface of the head-side gear 53. The head-side gear 53 is in a position in which the rotation axis direction thereof is substantially orthogonal to the rotation axis direction of the double speed gear 44.

In addition, in the double speed gear 44 and the head-side gear 53 meshed in this manner, the tool rotating mechanism 50 rotates at an increased speed with respect to the third rotating body 40 because the number of the head-side gear teeth 53b of the head-side gear 53 is smaller than the number of the double speed gear teeth 44b in the double speed gear 44. In the present embodiment, because the number of the double speed gear teeth 44b in the double speed gear 44 is 16 and the number of the head-side gear teeth 53b of the head-side gear 53 is 12, the rotation speed of the tool rotating mechanism 50 is increased to about 1.33 times the rotation speed of the third rotating body 40.

That is, the maximum rotation speed is further increased with respect to the third rotating body 40 whose maximum rotation speed is increased to 212,000 rpm, and the maximum rotation speed of the tool rotating mechanism 50 is approximately 282,000 rpm. That is, the maximum rotation speed (about 282,000 rpm) of the tool rotating mechanism 50 is about 7.11 times the maximum rotation speed (about 40,000 rpm) of the drive unit 2a, and the cutting tool 3 held by the tool rotating mechanism 50 can be rotated at the maximum rotation speed of about 282,000 rpm.

In the rotation transmission mechanism 10 configured in this manner, the cutting tool 3 can be rotated at a high speed without placing a load on the head-side gear 53, and the practitioner can cut a tooth more smoothly. In addition, because the time required for cutting caries, which is an affected part, can be shortened, the load on the patient can be further reduced.

In addition, because the double speed gear 44 in the third gear mechanism is a bevel gear provided at the end portion on the distal end side F of the third rotary shaft 43, that is, because both the meshing double speed gear 44 and head-side gear 53 are bevel gears, the tool rotating mechanism 50 can be rotated with an axis along a direction orthogonal to the rotation axis of the third rotary shaft 43 as a rotation axis.

Because the third gear mechanism is a portion that transmits rotation in a substantially orthogonal direction by using a bevel gear, it is necessary to further strengthen the meshing between the gears, and conventionally, the number of teeth of the head-side gear is larger than the number of teeth of the double speed gear, that is, the gear ratio is set as a speed reducing ratio. However, in the present embodiment, to make the maximum rotation speed of the tool rotating mechanism 50 approximately 7.11 times the maximum rotation speed of the drive unit 2a while strengthening the meshing between the gears, the gear ratio in the third gear mechanism is set to a speed increasing ratio (1.33 times) close to 1 time.

As described above, in the motor handpiece 1, the rotation transmission mechanism 10 is provided with the three gear mechanisms of the first gear mechanism 10A (the drive gear 25 and the pinion gear 31), the second gear mechanism 10B (the bevel gear 34 and the middle gear 41), and the third gear mechanism 10C (the double speed gear 44 and the head-side gear 53). That is, a three-gear system is adopted.

Therefore, the maximum rotation speed of the cutting tool 3 can be increased while the rotation of the drive unit 2a is transmitted to the cutting tool 3 in stages. Therefore, it is possible to suppress deterioration in durability of the handpiece due to concentration of a load on a specific gear mechanism among the plurality of gear mechanisms.

The outer diameter of the bevel gear 34 formed in this manner is approximately 0.6 times the outer diameter of the drive gear 25. The outer diameter of the middle gear 41 is approximately 0.5 times the outer diameter of the drive gear 25. That is, the outer diameter of the plurality of gear mechanisms in the rotation transmission mechanism 10 decreases toward the distal end side F. Therefore, it is possible to reduce the outer diameter of the body 5 incorporating the second rotating body 30 and the third rotating body 40.

In addition, because the second rotary shaft 33 and the third rotary shaft 43 are configured to have an obtuse angle, it is possible to bend the body 5 incorporating the bevel gear 34 and the middle gear 41, and therefore the distal end portion of the handpiece that is easily inserted into the oral cavity can be easily accessed toward the back. Therefore, the practitioner can easily operate the motor handpiece 1, and can appropriately cut a tooth to be treated. Furthermore, the practitioner can smoothly cut a tooth easily and efficiently even if the tooth is positioned in the back of the oral cavity such as molars.

<Modification>

In the present embodiment described above, the number of teeth of the drive gear 25, the pinion gear 31, the bevel gear 34, the middle gear 41, the double speed gear 44, and the head-side gear 53 is 23, 7, 13, 8, 16, and 12, respectively, as described above. However, these gears do not have to have these numbers of teeth, and each number of teeth can be changed.

Now, the handpiece has restrictions that it must be lightweight and small and must ensure durability. For this reason, in the conventional handpiece, for example, stainless steel, copper alloy, or the like is used, and the diameter thereof gradually decreases from the handle to the head. The head is designed to have a height in the range of 13.0 to 17.0 mm and a diameter in the range of 8.5 to 10.5 mm, which is very small in size. In the handpiece having such a material and size, the number of teeth and the like are designed such that the internal gear is not damaged.

A modification of the motor handpiece 1 in which the rotation speed of the tool rotating mechanism 50 is 5.5 times or more the rotation speed of the drive unit 2a will be described on the premise of the restriction in the conventional handpiece. That is, a modification of the motor handpiece 1 in which the speed increasing ratio of the gear ratio of each of the first to third gear mechanisms is set to a predetermined range and the gear mechanisms have a predetermined combination will be described in detail below.

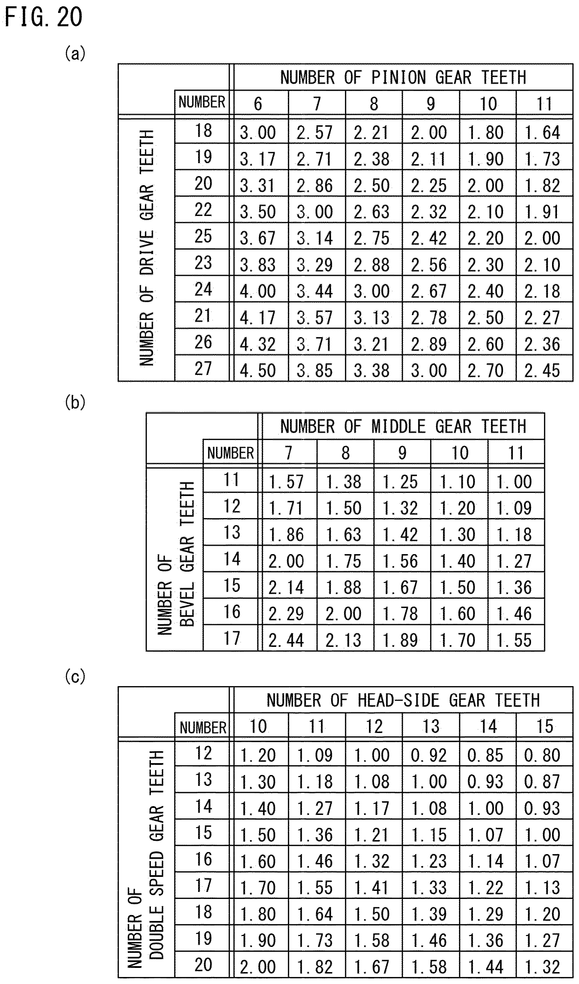

Specifically, the rotation speed of the cutting tool 3 may be set to 5.5 times or more the rotation speed of the drive unit 2a with the number of teeth in each gear being adjusted and the gear ratios of the first gear mechanism 10A, the second gear mechanism 10B, and the third gear mechanism 10C being changed as shown in the tables shown in FIG 20.

FIG 20(a) shows the rotation speed change rate according to the numbers of teeth of the drive gear 25 and the pinion gear 31, that is, the rotation speed change rate Sa of the first gear mechanism 10A. FIG 20(b) shows the rotation speed change rate according to the numbers of teeth of the bevel gear 34 and the middle gear 41, that is, the rotation speed change rate Sb of the second gear mechanism 10B. FIG 20(c) shows the rotation speed change rate according to the numbers of teeth of the double speed gear 44 and the head-side gear 53, that is, the rotation speed change rate Sc of the third gear mechanism 10C.

More specifically, the gear ratio of the first gear mechanism 10A, the gear ratio of the second gear mechanism 10B, and the gear ratio of the third gear mechanism 10C are appropriately combined to constitute the motor handpiece 1 in which the rotation speed of the tool rotating mechanism 50 is 5.5 times or more the rotation speed of the drive unit 2a.

The number of teeth of the drive gear 25 can be appropriately changed in the range of 18 to 27. The number of teeth of the pinion gear 31 to be meshed with the drive gear 25 can be appropriately changed in the range of 6 to 11.

Appropriately setting the numbers of teeth of the drive gear 25 and the pinion gear 31 like this can realize a setting of the rotation speed change rate between the first rotary shaft 22 and the second rotary shaft 33 by the first gear mechanism 10A, that is, the rotation speed change rate Sa of the first gear mechanism 10A to 1.64 times to 4.50 times as shown in FIG 20(a). That is, appropriately setting the numbers of teeth of the drive gear 25 and the pinion gear 31 can realize a rotation of the second rotary shaft 33 at a desired rotation speed with respect to the first rotary shaft 22.

If the number of teeth of the drive gear 25 is 17 or less, the cutting tool 3 cannot be rotated at a desired rotation speed. Specifically, if the number of teeth of the drive gear 25 is 17, the rotation speed change rate Sa in the first gear mechanism 10A is 2.6 times or less. Therefore, to rotate the tool rotating mechanism 50 at a rotation speed 5.5 times or more the rotation speed of the drive unit 2a, it is necessary to set the rotation speed change rate Sb of the second gear mechanism 10B and the rotation speed change rate Sc of the third gear mechanism 10C to be large.

When the rotation speed change rate is set to be large like this, the load on the second gear mechanism 10B or the third gear mechanism 10C increases, and the durability of the second gear mechanism 10B or the third gear mechanism 10C may decrease. Therefore, it is difficult to increase the rotation speed of the motor holder 2 and rotate the tool rotating mechanism 50 at a rotation speed 5.5 times or more the rotation speed of the drive unit 2a.

If the size of each gear is increased to improve the strength of the second gear mechanism 10B or the third gear mechanism 10C, the outer diameter of the body 5, the neck 6, or the head 7 becomes large, it becomes difficult to insert the head 7 into the oral cavity of the patient, and it becomes difficult to perform the treatment because the head 7 does not turn slightly in the oral cavity.

On the other hand, if the number of teeth of the drive gear 25 is set to 28 or more while maintaining the strength of the drive gear teeth 25b, the tooth length and the tooth thickness of the drive gear teeth 25b decrease. Therefore, the strength of the drive gear teeth 25b decreases, and slippage easily occurs between the drive gear 25 and the pinion gear 31.

Similarly, if the number of teeth of the pinion gear 31 is set to 5 or less, the tooth thickness of each tooth increases or the interval between the teeth increases, and therefore the meshing with the corresponding drive gear 25 decreases, and the rotation cannot be smoothly transmitted. If the outer shape of the pinion gear 31 is reduced to smoothly transmit the rotation, the strength of the pinion gear 31 decreases and the durability of the pinion gear 31 decreases.

If the number of teeth of the pinion gear 31 is set to 12 or more while maintaining the strength of the pinion teeth 31b, the tooth length and the tooth thickness of the pinion teeth 31b decrease, and the meshing between the drive gear 25 and the pinion gear 31 tends to decrease.

The numbers of teeth of the bevel gear 34 and the middle gear 41 constituting the second gear mechanism 10B can also be appropriately set. Specifically, the number of teeth of the bevel gear 34 can be appropriately set in the range of 11 to 17, and the number of teeth of the middle gear 41 meshing with the bevel gear 34 can also be appropriately set in the range of 7 to 11.

Appropriately setting the numbers of teeth of the bevel gear 34 and the middle gear 41 like this can realize a setting of the rotation speed change rate between the second rotary shaft 33 and the third rotary shaft 43 by the second gear mechanism 10B, that is, the rotation speed change rate Sb of the second gear mechanism 10B to 1.00 times to 2.43 times as shown in the table of FIG 20(b). That is, appropriately setting the numbers of teeth of the bevel gear 34 and the middle gear 41, can realize a rotation of the third rotary shaft 43 at a desired rotation speed with respect to the second rotary shaft 33.

If the number of teeth of the bevel gear 34 is set to 10 or less, the rotation speed of the second rotary shaft 33 becomes approximately 1.4 times or less. Therefore, to increase the rotation speed of the motor holder 2 and rotate the cutting tool 3 at a desired rotation speed, it is necessary to increase the rotation speed change rate Sa of the first gear mechanism 10A or the rotation speed change rate Sc of the third gear mechanism 10C. In this case, the load on the first gear mechanism 10A or the third gear mechanism 10C increases, and the durability of the first gear mechanism 10A or the third gear mechanism 10C may decrease.

On the other hand, if the number of teeth of the bevel gear 34 is set to 18 or more while maintaining the strength of the bevel gear teeth 34b, the tooth length and the tooth thickness of the bevel gear teeth 34b decrease. Therefore, the strength of the bevel gear teeth 34b decreases.

Similarly, if the number of teeth of the middle gear 41 is set to 6 or less, the tooth thickness of each tooth increases, or the interval between the teeth increases. Therefore, the meshing with the corresponding bevel gear 34 decreases, and the rotation cannot be smoothly transmitted. If the outer shape of the middle gear 41 is reduced to smoothly transmit the rotation, the strength of the middle gear 41 decreases and the durability of the middle gear 41 decreases.

If the number of teeth of the middle gear 41 is set to 13 or more while maintaining the strength of the middle gear teeth 41b, the tooth length and the tooth thickness of the middle gear teeth 41b decreases. Therefore, the strength of the middle gear teeth 41b decreases.

If the sizes of the bevel gear 34 and the middle gear 41 are increased to improve the strength, the outer diameter of the body 5 increases, and the operability in a narrow oral cavity decreases.

Similarly, the numbers of teeth of the double speed gear 44 and the head-side gear 53 constituting the third gear mechanism 10C can also be appropriately set. Specifically, the number of teeth of the double speed gear 44 can be appropriately set in the range of 12 to 20, and the number of teeth of the head-side gear 53 meshing with the double speed gear 44 can also be appropriately set in the range of 10 to 15.

Appropriately setting the numbers of teeth of the double speed gear 44 and the head-side gear 53 like this can realize a setting of the rotation speed change rate between the third rotation shaft 43 and the tool holder 51 by the third gear mechanism 10C to 0.80 times to 2.00 times. That is, appropriately setting the numbers of teeth of the third bearing 42 and the head-side gear 53 can realize a rotation of the tool holder 51 at a desired rotation speed with respect to the third rotary shaft 43.

If the number of teeth of the double speed gear 44 is 11 or less, the rotation speed change rate of the third gear mechanism 10C becomes approximately 1.2 times or less. Therefore, to increase the rotation speed of the motor holder 2 and rotate the cutting tool 3 at a desired rotation speed, it is necessary to increase the rotation speed change rate in the first gear mechanism 10A or the second gear mechanism 10B. In this case, the load on the first gear mechanism 10A or the second gear mechanism 10B increases, and the durability of the first gear mechanism 10A or the second gear mechanism 10B may decrease. Therefore, it is difficult to increase the rotation speed of the motor holder 2 to rotate the cutting tool 3 at a desired rotation speed.

On the other hand, if the number of teeth of the double speed gear 44 is set to 21 or more while maintaining the strength of the double speed gear teeth 44b, the tooth length and the tooth thickness of the double speed gear teeth 44b decrease, and therefore the strength of the double speed gear teeth 44b decreases.

Similarly, if the number of teeth of the head-side gear 53 is set to 10 or less, the tooth thickness of each tooth increases, or the interval between the teeth increases. Therefore, the meshing with the corresponding double speed gear 44 decreases, and the rotation cannot be smoothly transmitted. If the outer shape of the head-side gear 53 is reduced to smoothly transmit the rotation, the strength of the head-side gear 53 decreases and the durability of the head-side gear 53 decreases.

If the sizes of the double speed gear 44 and the head-side gear 53 are increased to improve the strength, the outer diameters of the neck 6 and the head 7 increase. Therefore, operability in a narrow oral cavity deteriorates. In addition, the patient needs to open his/her mouth wide, which increases the load on the patient. It may be a heavier load for children.

In view of this, it is possible to appropriately rotate the cutting tool 3 at a desired rotation speed by setting the rotation speed change rate of the third gear mechanism 10C in the range shown in the table of FIG 20(c) and setting the rotation speed change rate of the entire rotation transmission mechanism 10 to 5.5 times or more, preferably 6.5 times or more and 7.2 times or less.

Specifically, by making the minimum rotation speed change rate and the maximum rotation speed change rate in the gear mechanism on the distal end side F (that is, the third gear mechanism 10C) smaller than those of the gear mechanism on the proximal end side B (that is, the first gear mechanism 10A and the second gear mechanism 10B), it is possible to approximate the size of each tooth and the number of teeth while reducing the size of the gear meshed on the distal end side F. This can improve the meshing and reduce the load on the gear.

Furthermore, setting the rotation speed change rate of the drive gear 25 and the pinion gear 31 arranged on the proximal end side B (the rotation speed change rate Sa in the first gear mechanism 10A) to be large can realize a setting of the rotation speed change rate of the bevel gear 34, the middle gear 41, the double speed gear 44, and the head-side gear 53 arranged on the distal end side F to be low. This can reduce loads on the bevel gear 34, the middle gear 41, the double speed gear 44, and the head-side gear 53 having small inner diameters. Therefore, the rotation of the drive unit 2a can be reliably and smoothly transmitted to the cutting tool 3.

In addition, it is possible to more reliably transmit the rotation of the drive unit 2a to the cutting tool 3 while preventing a decrease in durability of each gear mechanism that transmits the rotation between the rotary shafts, and it is possible to cut a tooth as an affected part more smoothly.

In addition, because the size of the third gear mechanism 10C on the distal end side F can be reduced, the diameter becomes smaller toward the distal end side F. Therefore, the cutting tool can be easily inserted into the oral cavity, and a tooth can be smoothly cut. As a result, the treatment can be performed without imposing a load on the patient.

As described above, the rotation transmission mechanism 10 can appropriately change the rotation speed change rates of the first gear mechanism 10A (the drive gear 25 and the pinion gear 31), the second gear mechanism 10B (the bevel gear 34 and the middle gear 41), and the third gear mechanism 10C (the double speed gear 44 and the head-side gear 53), and set the rotation speed of the cutting tool 3 to 5.5 times or more the rotation speed of the motor holder 2. This can increase at least the maximum rotation speed (40,000 rpm) of the drive unit 2a to set the maximum rotation speed of the cutting tool 3 to 220,000 rpm. Therefore, the cutting tool 3 can be rotated at a high speed as compared with the conventional motor handpiece. This enables the practitioner to easily cut caries, and the load on the patient can be reduced.

As described above, it is more preferable that the numbers of teeth of the drive gear 25 and the pinion gear 31 are 23 and 7, respectively, the numbers of teeth of the bevel gear 34 and the middle gear 41 are 13 and 8, respectively, and the numbers of teeth of the double speed gear 44 and the head-side gear 53 are 16 and 12, respectively. In this case, the rotation speed change rates of the first gear mechanism 10A (the drive gear 25 and the pinion gear 31), the second gear mechanism 10B (the bevel gear 34 and the middle gear 41), and the third gear mechanism 10C (the double speed gear 44 and the head-side gear 53) are 3.26 times, 1.63 times, and 1.33 times, respectively.

As a result, even in the motor handpiece 1 including a motor having a typical rotation speed with a maximum rotation speed of 40,000 rpm, the maximum rotation speed of the cutting tool 3 can be set to 282,000 rpm, and the load on each of the first gear mechanism 10A, the second gear mechanism 10B, and the third gear mechanism 10C can be dispersed. In addition, because the rotation speed change rate of the third gear mechanism 10C can be minimized, the outer diameters of the neck 6 and the head 7 can be reduced. This enables the practitioner to easily perform the treatment and can reduce the load on the patient.

When the rotation speed change rate of the maximum rotation speed of the tool rotating mechanism 50 with respect to the maximum rotation speed of the drive unit 2a increases, the maximum rotation speed of the cutting tool 3 increases, and a tooth can be smoothly cut by the cutting tool 3, but the structural load of the rotation transmission mechanism 10 whose speed is increased by the gear mechanisms 10A, 10B, and 10C increases. In addition, the coupling portion 4, the body 5, the neck 6, and the head 7 constituting the motor handpiece 1 are gradually reduced in diameter from the proximal end side B toward the distal end side F. Therefore, it is preferable to satisfy the following formula.

Specifically, as shown in Formula 1, it is preferable to set the rotation speed change rate Sa of the first gear mechanism 10A, the rotation speed change rate Sb of the second gear mechanism 10B, and the rotation speed change rate Sc of the third gear mechanism 10C to decrease in this order. Because the third gear mechanism 10C may decrease the speed of the tool rotating mechanism 50 with respect to the third rotating body 40, the rotation speed change rate Sc is an absolute value thereof.

[Mathematical Formula 1]

$$Sa \geqq Sb > \left| Sc \right|$$

The coupling portion 4, the body 5, the neck 6, and the head 7 constituting the motor handpiece 1 are arranged in this order from the proximal end side B toward the distal end side F and are gradually reduced in diameter, and the first rotating body 20, the second rotating body 30, the third rotating body 40, and the tool rotating mechanism 50 incorporated therein are also gradually reduced in size. Therefore, the structural strength is also likely to decrease.

In particular, because the tool rotating mechanism 50 has a function of holding the cutting tool 3 and also has a large change in the rotation axis direction in the third gear mechanism 10C, the structure thereof tends to be more complicated than other gear mechanisms. In addition, a load of the cutting tool 3 that cuts a tooth by rotating the tool rotating mechanism 50 at a high speed directly acts on the tool rotating mechanism 50.

On the other hand, when the rotation speed change rate in the gear mechanism increases, that is, when the rotation speed difference between the rotation input side and the side where the speed is increased increases, a load acts on the speed increase side. Therefore, structurally, it is preferable to obtain a desired maximum rotation speed at a rotation speed change rate as low as possible.

Therefore, it is preferable to set the ratio of the rotation speed change rate Sb of the second gear mechanism 10B to the rotation speed change rate Sc of the third gear mechanism 10C to be smaller than the ratio of the rotation speed change rate Sa of the first gear mechanism 10A to the rotation speed change rate Sb of the second gear mechanism 10B as shown in Formula 2.

[Mathematical Formula 2]

$$\frac{Sa}{Sb} \geqq \frac{Sb}{Sc}$$

As described above, in the rotation transmission mechanism 10, although the rotation axis direction changes between the transmission side and the passive side in the rotation via each of the first gear mechanism 10A, the second gear mechanism 10B, and the third gear mechanism 10C, the direction of the second rotary shaft 33 of the second rotating body 30 with respect to the first rotary shaft 22 in the first rotating body 20, the direction of the third rotary shaft of the third rotating body 40 with respect to the second rotary shaft 33, and the direction of the head-side gear 53 of the tool rotation mechanism 50 with respect to the third rotary shaft 43 increase in this order. However, when Formula 2 is satisfied, the first rotating body 20, the second rotating body 30, the third rotating body 40, and the tool rotating mechanism 50 in the rotation transmission mechanism 10 can smoothly transmit the rotation while increasing the rotation speed.

As described above, although the combination of the rotation speed change rates satisfying Formula 1 is more preferable, the rotation speed change rate Sa of the first gear mechanism 10A and the rotation speed change rate Sb of the second gear mechanism 10B may be at the same level as long as the rotation speed of the tool rotating mechanism 50 is 5.5 times or more the rotation speed of the drive unit 2a. Alternatively, the rotation speed change rate Sb may be slightly larger than the rotation speed change rate Sa, and the rotation speed change rate Sc of the third gear mechanism 10C may be smaller than the rotation speed change rate Sa and the rotation speed change rate Sb.

Reference Signs List

| | |
|---|---|
| 1 | motor handpiece |
| 2a | drive unit |
| 3 | cutting tool |
| 4 | coupling portion |
| 5 | body |
| 6 | neck |
| 7 | head |
| 21 | first rotary shaft |
| 25 | drive gear |
| 31 | pinion gear |
| 33 | second rotary shaft |
| 34 | bevel gear |
| 41 | middle gear |
| 43 | third rotary shaft |
| 44 | double speed gear |
| 50 | tool rotating mechanism |
| 53 | head-side gear |

## Claims

1. A dental handpiece (1) comprising:

   a main body (5, 6) to be held by a user; and
   a head (7) connected to the main body (5, 6),
   wherein the head (7) includes a tool rotating mechanism (50) that holds a cutting tool (3) for operating a region to be operated, rotates based on rotation of a drive unit (2a) that is rotationally driven, and rotates the cutting tool (3), wherein
   the main body (5, 6) includes a first rotary shaft (22) to which rotation of the drive unit (2a) is transmitted, a second rotary shaft (33) to which rotation of the first rotary shaft (22) is transmitted, and a third rotary shaft (43) to which rotation of the second rotary shaft (33) is transmitted,
   a first gear mechanism (10A) that increases and transmits rotation of the first rotary shaft (22) to the second rotary shaft (33) is provided between the first rotary shaft (22) and the second rotary shaft (33),
   a second gear mechanism (10B) that increases and transmits rotation of the second rotary shaft (33) to the third rotary shaft (43) is provided between the second rotary shaft (33) and the third rotary shaft (43),
   a third gear mechanism (10C) that increases and transmits rotation of the third rotary shaft (43) to the tool rotating mechanism (50) is provided between the third rotary shaft (43) and the tool rotating mechanism (50),
   the first gear mechanism includes a gear with 23 teeth and a gear with 7 teeth, the second gear mechanism includes a gear with 13 teeth and a gear with 8 teeth, and the third gear mechanism includes a gear with 16 teeth and a gear with 12 teeth.

2. The dental handpiece (1) according to claim 1, wherein at least one of the first gear mechanism (10A) and the second gear mechanism (10B) includes an internal gear (34) that transmits rotation and an external gear (41) to which rotation is transmitted, the external gear (41) having a smaller diameter than the internal gear (34).

3. The dental handpiece (1) according to claim 2, wherein a tooth (41b) of the external gear (41) is configured such that a tooth surface has an arc protruding toward a radially outer side of the external gear (41).

4. The dental handpiece (1) according to any one of claims 1 to 3, wherein

   the main body (5, 6) includes a substantially cylindrical first main body provided with the second rotary shaft (33) and a substantially cylindrical second main body provided with a distal end of the third rotary shaft (43), and
   the second main body has a head side smaller in diameter than the first main body side.

5. The dental handpiece (1) according to claim 4, wherein the second rotary shaft (33) and the third rotary shaft (43) form an obtuse angle.

6. The dental handpiece (1) according to any one of claims 1 to 5, wherein

the drive unit (2a) has a maximum rotation speed of 40,000 rpm, and
the tool rotating mechanism (50) has a maximum rotation speed of 285,000 rpm.

**Patentansprüche**

1. Zahnärztliches Handgerät (1), aufweisend:

   einen Hauptkörper (5, 6), der von einem Benutzer zu halten ist; und
   einen Kopf (7), der mit dem Hauptkörper (5, 6) verbunden ist,
   wobei der Kopf (7) einen Werkzeugdrehmechanismus (50) umfasst, der ein Schneidwerkzeug (3) zum Bedienen eines zu bedienenden Bereichs hält, sich basierend auf einer Drehung einer Antriebseinheit (2a) dreht, die drehend angetrieben wird, und das Schneidwerkzeug (3) dreht, wobei
   der Hauptkörper (5, 6) eine erste Drehwelle (22), auf die eine Drehung der Antriebseinheit (2a) übertragen wird, eine zweite Drehwelle (33), auf die eine Drehung der ersten Drehwelle (22) übertragen wird, und eine dritte Drehwelle (43), auf die eine Drehung der zweiten Drehwelle (33) übertragen wird, umfasst,
   ein erster Getriebemechanismus (10A), der eine Drehung der ersten Drehwelle (22) auf die zweite Drehwelle (33) erhöht und überträgt, zwischen der ersten Drehwelle (22) und der zweiten Drehwelle (33) vorgesehen ist,
   ein zweiter Getriebemechanismus (10B), der eine Drehung der zweiten Drehwelle (33) auf die dritte Drehwelle (43) erhöht und überträgt, zwischen der zweiten Drehwelle (33) und der dritten Drehwelle (43) vorgesehen ist,
   ein dritter Getriebemechanismus (10C), der eine Drehung der dritten Drehwelle (43) auf den Werkzeugdrehmechanismus (50) erhöht und überträgt, zwischen der dritten Drehwelle (43) und dem Werkzeugdrehmechanismus (50) vorgesehen ist,
   der erste Getriebemechanismus ein Zahnrad mit 23 Zähnen und ein Zahnrad mit 7 Zähnen umfasst, der zweite Getriebemechanismus ein Zahnrad mit 13 Zähnen und ein Zahnrad mit 8 Zähnen umfasst und der dritte Getriebemechanismus ein Zahnrad mit 16 Zähnen und ein Zahnrad mit 12 Zähnen umfasst.

2. Zahnärztliches Handgerät (1) nach Anspruch 1, wobei zumindest einer von dem ersten Getriebemechanismus (10A) und dem zweiten Getriebemechanismus (10B) ein Innenzahnrad (34), das eine Drehung überträgt, und ein Außenzahnrad (41), auf das eine Drehung übertragen wird, umfasst, wobei das Außenzahnrad (41) einen kleineren Durchmesser als das Innenzahnrad (34) hat.

3. Zahnärztliches Handgerät (1) nach Anspruch 2, wobei ein Zahn (41b) des Außenzahnrads (41) so konfiguriert ist, dass eine Zahnoberfläche einen Bogen hat, der in Richtung einer radial äußeren Seite des Außenzahnrads (41) vorsteht.

4. Zahnärztliches Handgerät (1) nach einem der Ansprüche 1 bis 3, wobei

   der Hauptkörper (5, 6) einen im Wesentlichen zylindrischen ersten Hauptkörper, der mit der zweiten Drehwelle (33) versehen ist, und einen im Wesentlichen zylindrischen zweiten Hauptkörper, der mit einem distalen Ende der dritten Drehwelle (43) versehen ist, umfasst, und
   der zweite Hauptkörper eine Kopfseite hat, die einen kleineren Durchmesser als die erste Hauptkörperseite hat.

5. Zahnärztliches Handgerät (1) nach Anspruch 4, wobei die zweite Drehwelle (33) und die dritte Drehwelle (43) einen stumpfen Winkel bilden.

6. Zahnärztliches Handgerät (1) nach einem der Ansprüche 1 bis 5, wobei

   die Antriebseinheit (2a) eine maximale Drehgeschwindigkeit von 40.000 U/min hat, und
   der Werkzeugdrehmechanismus (50) eine maximale Drehgeschwindigkeit von 285.000 U/min hat.

**Revendications**

1. Pièce à main dentaire (1) comprenant :

   un corps principal (5, 6) à tenir par un utilisateur ; et
   une tête (7) reliée au corps principal (5, 6),

dans laquelle la tête (7) comporte un mécanisme de rotation d'outil (50) qui soutient un outil de coupe (3) pour exploiter une région à exploiter, tourne sur la base d'une rotation d'une unité d'entraînement (2a) qui est entraînée en rotation, et fait tourner l'outil de coupe (3), dans laquelle

le corps principal (5, 6) comporte un premier arbre rotatif (22) auquel une rotation de l'unité d'entraînement (2a) est transmise, un deuxième arbre rotatif (33) auquel une rotation du premier arbre rotatif (22) est transmise, et un troisième arbre rotatif (43) auquel une rotation du deuxième arbre rotatif (33) est transmise,

un premier mécanisme d'engrenage (10A) qui augmente et transmet une rotation du premier arbre rotatif (22) au deuxième arbre rotatif (33) est agencé entre le premier arbre rotatif (22) et le deuxième arbre rotatif (33),

un deuxième mécanisme d'engrenage (10B) qui augmente et transmet une rotation du deuxième arbre rotatif (33) au troisième arbre rotatif (43) est agencé entre le deuxième arbre rotatif (33) et le troisième arbre rotatif (43),

un troisième mécanisme d'engrenage (10C) qui augmente et transmet une rotation du troisième arbre rotatif (43) au mécanisme de rotation d'outil (50) est agencé entre le troisième arbre rotatif (43) et le mécanisme de rotation d'outil (50),

le premier mécanisme d'engrenage comporte un engrenage à 23 dents et un engrenage à 7 dents, le deuxième mécanisme d'engrenage comporte un engrenage à 13 dents et un engrenage à 8 dents, et le troisième mécanisme d'engrenage comporte un engrenage à 16 dents et un engrenage à 12 dents.

2. Pièce à main dentaire (1) selon la revendication 1, dans laquelle au moins un parmi le premier mécanisme d'engrenage (10A) et le deuxième mécanisme d'engrenage (10B) comporte un engrenage interne (34) qui transmet une rotation et un engrenage externe (41) auquel une rotation est transmise, l'engrenage externe (41) ayant un diamètre plus petit que l'engrenage interne (34).

3. Pièce à main dentaire (1) selon la revendication 2, dans laquelle une dent (41b) de l'engrenage externe (41) est configurée de sorte qu'une surface de dent présente un arc faisant saillie vers un côté radialement extérieur de l'engrenage externe (41).

4. Pièce à main dentaire (1) selon l'une des revendications 1 à 3, dans laquelle

le corps principal (5, 6) comporte un premier corps principal sensiblement cylindrique muni du deuxième arbre rotatif (33) et un second corps principal sensiblement cylindrique muni d'une extrémité distale du troisième arbre rotatif (43), et

le second corps principal présente un côté tête de diamètre plus petit que le côté premier corps principal.

5. Pièce à main dentaire (1) selon la revendication 4, dans laquelle le deuxième arbre rotatif (33) et le troisième arbre rotatif (43) forment un angle obtus.

6. Pièce à main dentaire (1) selon l'une des revendications 1 à 5, dans laquelle

l'unité d'entraînement (2a) a une vitesse de rotation maximale de 40000 tours/min, et

le mécanisme de rotation d'outil (50) a une vitesse de rotation maximale de 285000 tours/min.

EP 4 039 219 B1

FIG. 1

19

FIG. 2

FIG. 3

# FIG. 4

(a)

F ⟷ B

(b)

α PORTION

(c)

α PORTION

FIG. 5

# FIG. 6

(a)

(b)

FIG. 7

FIG. 8

(a)

(b)

FIG. 9

FIG. 10

# FIG. 11

(a)

(b)

# FIG. 12

(a)

(b)

# FIG. 13

# FIG. 14

# FIG. 15

## FIG. 16

# FIG. 17

# FIG. 18

# FIG. 19

F ←——————→ B

# FIG. 20

(a)

| NUMBER | NUMBER OF PINION GEAR TEETH | | | | | |
|---|---|---|---|---|---|---|
| | 6 | 7 | 8 | 9 | 10 | 11 |
| 18 | 3.00 | 2.57 | 2.21 | 2.00 | 1.80 | 1.64 |
| 19 | 3.17 | 2.71 | 2.38 | 2.11 | 1.90 | 1.73 |
| 20 | 3.31 | 2.86 | 2.50 | 2.25 | 2.00 | 1.82 |
| 22 | 3.50 | 3.00 | 2.63 | 2.32 | 2.10 | 1.91 |
| 25 | 3.67 | 3.14 | 2.75 | 2.42 | 2.20 | 2.00 |
| 23 | 3.83 | 3.29 | 2.88 | 2.56 | 2.30 | 2.10 |
| 24 | 4.00 | 3.44 | 3.00 | 2.67 | 2.40 | 2.18 |
| 21 | 4.17 | 3.57 | 3.13 | 2.78 | 2.50 | 2.27 |
| 26 | 4.32 | 3.71 | 3.21 | 2.89 | 2.60 | 2.36 |
| 27 | 4.50 | 3.85 | 3.38 | 3.00 | 2.70 | 2.45 |

(NUMBER OF DRIVE GEAR TEETH)

(b)

| NUMBER | NUMBER OF MIDDLE GEAR TEETH | | | | |
|---|---|---|---|---|---|
| | 7 | 8 | 9 | 10 | 11 |
| 11 | 1.57 | 1.38 | 1.25 | 1.10 | 1.00 |
| 12 | 1.71 | 1.50 | 1.32 | 1.20 | 1.09 |
| 13 | 1.86 | 1.63 | 1.42 | 1.30 | 1.18 |
| 14 | 2.00 | 1.75 | 1.56 | 1.40 | 1.27 |
| 15 | 2.14 | 1.88 | 1.67 | 1.50 | 1.36 |
| 16 | 2.29 | 2.00 | 1.78 | 1.60 | 1.46 |
| 17 | 2.44 | 2.13 | 1.89 | 1.70 | 1.55 |

(NUMBER OF BEVEL GEAR TEETH)

(c)

| NUMBER | NUMBER OF HEAD-SIDE GEAR TEETH | | | | | |
|---|---|---|---|---|---|---|
| | 10 | 11 | 12 | 13 | 14 | 15 |
| 12 | 1.20 | 1.09 | 1.00 | 0.92 | 0.85 | 0.80 |
| 13 | 1.30 | 1.18 | 1.08 | 1.00 | 0.93 | 0.87 |
| 14 | 1.40 | 1.27 | 1.17 | 1.08 | 1.00 | 0.93 |
| 15 | 1.50 | 1.36 | 1.21 | 1.15 | 1.07 | 1.00 |
| 16 | 1.60 | 1.46 | 1.32 | 1.23 | 1.14 | 1.07 |
| 17 | 1.70 | 1.55 | 1.41 | 1.33 | 1.22 | 1.13 |
| 18 | 1.80 | 1.64 | 1.50 | 1.39 | 1.29 | 1.20 |
| 19 | 1.90 | 1.73 | 1.58 | 1.46 | 1.36 | 1.27 |
| 20 | 2.00 | 1.82 | 1.67 | 1.58 | 1.44 | 1.32 |

(NUMBER OF DOUBLE SPEED GEAR TEETH)

**EP 4 039 219 B1**

**REFERENCES CITED IN THE DESCRIPTION**

**Patent documents cited in the description**

- JP 2009028512 A
- US 2009004622 A1
- JP 2015006488 A